(19) Europäisches Patentamt / European Patent Office / Office européen des brevets

(11) **EP 2 071 085 B1**

(12) **EUROPEAN PATENT SPECIFICATION**

(45) Date of publication and mention
of the grant of the patent:
**07.05.2014 Bulletin 2014/19**

(51) Int Cl.:
*E02F 9/02* *(2006.01)*     *E02F 9/20* *(2006.01)*
*A01G 23/00* *(2006.01)*     *B66C 23/84* *(2006.01)*
*E21B 7/02* *(2006.01)*

(21) Application number: **08021493.5**

(22) Date of filing: **11.12.2008**

(54) **Manual leveling control system and method for construction equipment**

Manuelles Nivellierungssteuerungssystem und Verfahren für Baufahrzeuge

Système de commande de mise à niveau manuelle et procédé de construction d'équipement

(84) Designated Contracting States:
**DE FR GB IT**

(30) Priority: **13.12.2007 KR 20070129817**

(43) Date of publication of application:
**17.06.2009 Bulletin 2009/25**

(73) Proprietor: **Volvo Construction Equipment
Holding Sweden AB
631 85 Eskilstuna (SE)**

(72) Inventors:
• **Kim, Jin Seop
Changwon-si
Gyeongsangnam-do (KR)**
• **Lee, Chang Soo
Changwon-si
Gyeongsangnam-do (KR)**
• **Kim, In Woo
Changwon-si
Kyungsangnam-do (KR)**

(74) Representative: **Dr. Weitzel & Partner
Patent- und Rechtsanwälte mbB
Friedenstrasse 10
89522 Heidenheim (DE)**

(56) References cited:
**WO-A2-2007/139878     US-A1- 2006 289 205**

**Description**

**BACKGROUND OF THE INVENTION**

**Field of the invention**

The present invention relates generally to a leveling control system and method for construction equipment, and more particularly to a manual leveling control system and method for construction equipment, which can perform a leveling in accordance with a user's manual manipulation.

**Description of the Prior Art**

WO 2007/139878 A2 discloses a leveling system for a forestry machine with the features therefrom known, summarized in the preamble of claim 1.

In construction equipment, such as an excavator, a logging device, a crane, and the like, which is working on an inclined site, an upper swing frame is inclined to a horizontal surface depending on the ruggedness of ground.

When the construction equipment is in an inclined state, inclination of an upper swing frame against a horizontal surface is changed as the upper swing frame is swiveled, and this causes the work to be done in an unstable state of the equipment. Also, as the center of gravity of the equipment is moved, a danger of overturning of the construction equipment is increased.

In order to solve this problem, a method of moving the center of gravity of the construction equipment near to ground through tilting of an upper swing frame on an inclined site has been used.

As a recent technology related to the above-described method, U.S. Patent No. 6,609,581 discloses a tilting unit having an upper support being supported and tilted by two hydraulic cylinders.

Also, U.S. Patent No. 6,158,539 discloses two hydraulic cylinders, upper bearing body support plate coupled to a center tilt shaft, and a lower plate.

On the other hand, Korean Patent Application No. 10-2007-0112983(Publication No. KR 20090047023A), filed by the applicant, discloses a leveling apparatus for excavator and forestry equipment having a tilting unit provided with four actuators.

In manipulating the tilting unit, the displacement value of a joystick is inputted on the basis of the front direction of a lower frame, and if an upper swing frame swivels right and left, a user should input the manipulation displacement of the joystick in consideration of the swing angle of the upper swing frame to cause inconvenience in use.

For example, it is frequent that the construction equipment starts its work after the upper swing frame swivels by 180°. In this case, if an operator manipulates the joystick to the left to add a positive inclination to the left side of the upper swing frame on the basis of the operator, the conventional tilting unit receives the input value on the basis of the front side of the lower frame and operates to add the positive inclination to the right side of the upper swing frame against the operator's intention. If such an error is made by an unskilled operator in a state that the construction equipment is on steep ground, the center of gravity of the equipment is moved in a wrong direction, and this may cause a safety accident, such as overturning of the construction equipment, to occur.

Accordingly, there is a need for development of a tilting system which facilitates user's manipulation of a joystick by making it possible that the tilting manipulation is performed in the front direction of a user, i.e. in the front direction of the upper swing frame.

**SUMMARY OF THE INVENTION**

Accordingly, the present invention has been made to solve the above-mentioned problems occurring in the prior art while advantages achieved by the prior art are maintained intact.

One object of the present invention is to provide a manual leveling control system and method for construction equipment, which can control the leveling of an upper swing frame in accordance with a user's intention.

In order to accomplish the above and other objects, there is provided a manual leveling control system for construction equipment having a tilting unit that is coupled between a lower frame having a traveling means and an upper swing frame having a cab and is so operated by actuators as to tilt the upper swing frame, wherein the upper swing frame swivels against the tilting unit, according to embodiments of the present invention, which includes a swing angle sensing unit sensing a swing angle of the upper swing frame and transmitting a signal for the sensed swing angle; a tilting manipulation input unit generating and transmitting a tilting manipulation signal corresponding to coordinate values on a coordinate system, having coordinate axes corresponding to left/right direction and front/rear direction of the upper swing frame, in accordance with a position manipulated by a user; and a control unit determining target actuators to be operated among actuators radially positioned around the center of the tilting unit from the coordinate values of the tilting manipulation signal and the swing angle of the upper swing frame, and calculating operation values for determining whether to extend/contract the target actuators and operation ranges of the target actuators, in order to tilt the upper swing frame against a reference surface in accordance with the tilting manipulation signal.

The control unit includes a manipulation signal analysis module outputting an angle of the coordinates and a coordinate distance or size from an original point to a coordinate point in accordance with the coordinate values, a compensation axis angle calculation module calculating a compensation axis angle from the coordinate angle and the swing angle of the upper swing frame, wherein the compensation axis angle indicates in plan view an angle between a reference axis of the reference surface and a tilting compensation axis on a horizontal surface of the upper swing frame, wherein the tilting compensation axis forms a tilting angle to be compensated between the reference surface and the horizontal surface of the upper swing frame, and an operation value calculation module calculating operation values of the target actuators to be operated from the coordinate distance or size and the compensation axis angle.

The actuators being radially positionable around the center of the tilting unit may be coupleable to both sides of respective tilt shafts which are substantially orthogonal to each other in '×' shape in plan view so that the tilt shafts seesaw, the coordinate distance or size outputted from the manipulation signal analysis module may correspond to an upward or downward tilting angle of the upper swing frame to be compensated or an ascending or descending length of one side of the tilting unit on the tilting compensation axis in accordance with the upward or downward tilting angle to be compensated, and the operation value calculation module may calculate the operation values for controlling the actuators connected to both sides of the same tilt shaft so as to be extended/contracted and vice versa with the same operation range.

In another aspect of the present invention, there is provided a manual leveling control method for construction equipment having a tilting unit that is coupled between a lower frame having a traveling means and an upper swing frame having a cab and is so operated by actuators as to tilt the upper swing frame, wherein the upper swing frame swivels against the tilting unit, which includes (A) receiving a tilting manipulation signal corresponding to position coordinate values generated in accordance with a manipulation of a tilting manipulation input device, and calculating a coordinate angle and a coordinate distance or size from an original point to a coordinate point on a coordinate system having coordinate axes corresponding to left/right direction and front/rear direction of the upper swing frame; (B) calculating a compensation axis angle from the coordinate angle and the swing angle of the upper swing frame, wherein the compensation axis angle indicates in plan view an angle between a reference axis of the reference surface and a tilting compensation axis on a horizontal surface of the upper swing frame, wherein the tilting compensation axis forms a tilting angle to be compensated between the reference surface and the horizontal surface of the upper swing frame; and (C) calculating an operation value for determining whether to extend/contract an actuator and an operation range of the actuator, which is determined as target actuators to be operated among actuators radially positioned around the center of the tilting unit, from the coordinate distance or size and the compensation axis angle, in order to tilt the upper swing frame against the reference surface in accordance with the tilting manipulation signal.

The step (A) includes if the position coordinate values are expressed as the coordinate angle against any one coordinate axis and the coordinate distance or size from the original point to the coordinate point, outputting the coordinate angle and the coordinate distance or size from the tilting manipulation signal of the position coordinate values; and if the coordinate values are expressed as X, Y coordinate values of a coordinate system having an X axis representing the left/right direction of the upper swing frame and a Y axis representing the front/rear direction of the upper swing frame, calculating the coordinate angle against any one coordinate axis and the coordinate distance or size from the original point to the coordinate point, from the X, Y coordinate values.

The actuators radially positioned around the center of the tilting unit may be A+ actuator and A- actuator coupled to both sides of one of tilt shafts which are substantially orthogonal to each other in 'x' shape in plan view so that the tilt shafts seesaw, and B+ actuator and B- actuator coupled to both sides of the other tilt shaft; the coordinate distance or size outputted in the step (A) may correspond to an upward or downward tilting angle of the upper swing frame to be compensated or an ascending or descending length of one side of the tilting unit on the tilting compensation axis in accordance with the upward or downward tilting angle to be compensated; and the step (C) may calculate the operation values for controlling the actuators connected to both sides of the same tilt shaft so as to be extended/contracted and vice versa with the same operation range.

An axis in the front direction of the lower frame that is the basis of the swing angle may coincide with the direction of the reference axis of the reference surface, the coordinate angle may be measured on the basis of a positive Y axis that corresponds to the front direction of the upper swing frame, and an angle having the same sign as the swing angle may refer to the same direction as the swing angle while an angle having an opposite sign to the swing angle may refer to an opposite direction to the swing angle, the reference axis may be a vertical axis along lengthwise direction in plane view, which passes through the center of an 'X'-shaped cross plane of the tilt shafts, and an upper side thereof may refer to a positive direction, and the compensation axis angle may be calculated as the sum of the coordinate angle and the swing angle.

## BRIEF DESCRIPTION OF THE DRAWINGS

The above and other objects, features and advantages of the present invention will be more apparent from the following detailed description taken in conjunction with the accompanying drawings, in which:

FIG. 1 is a perspective view schematically illustrating construction equipment to which the present invention is applied;
FIG. 2 is a perspective view schematically illustrating a tilting unit to which the present is applied;
FIG. 3 is a plan view of a tilting unit explaining a mount structure of an actuator to which the present invention is applied;
FIG. 4A is a perspective view schematically illustrating a swing bearing mounting plate of a tilting unit to which the present invention is applied;
FIG. 4B is a sectional view taken along line B-B of FIG. 4A;
FIG. 5 is a partially exploded perspective view of a tilt plate of a tilting unit to which the present invention is applied;
FIG. 6A is a perspective view of a tilting unit to which the present invention is applied;
FIG. 6B is a sectional view taken along line A-A of FIG. 6A;
FIG. 7A is a sectional view illustrating the tilting unit on the basis of a tilt shaft A as illustrated in FIG. 2, and FIG. 7B is a sectional view illustrating the tilting unit on the basis of a tilt shaft B as illustrated in FIG. 2;
FIG. 8 is a view illustrating the use state of a tilting unit to which the present invention is applied;
FIGS. 9A to 9D are views illustrating the use states of construction equipment keeping a leveling against inclined surfaces of the ground in every direction;
FIG. 10 is a plan view schematically illustrating a lower frame and a tilting unit to which the present invention is applied;
FIG. 11 is a view illustrating coordinates of a tilting manipulation input unit according to a preferred embodiment of the present invention;
FIG. 12 is a flowchart illustrating a coordinate value conversion process of a tilting manipulation input unit according to a preferred embodiment of the present invention;
FIG. 13 is a view illustrating operation sectors for calculating operation values according to a preferred embodiment of the present invention;
FIG. 14 is a flowchart illustrating a operation value calculating process according to a preferred embodiment of the present invention; and
FIG. 15 is a block diagram illustrating a manual leveling system for construction equipment according to a preferred embodiment of the present invention.

## DETAILED DESCRIPTION OF THE PREFERRED EMBODIMENTS

Hereinafter, a manual leveling control system and method for construction equipment according to preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

The construction equipment to which the present invention is applied is provided with a tilting unit coupled between a lower frame having a traveling means and an upper swing frame having a cab to operate as an actuator that tilts the upper swing frame. Specifically, the tilting unit is interposed between the upper swing frame having a cab and a boom to which a working device is attached and the lower frame having the traveling means such as wheels or a caterpillar, and performs leveling of the upper swing frame with a reference horizontal surface that is perpendicular to the direction of gravity. In the construction equipment, the upper swing frame swivels against the tiling unit. The tilting unit may swivel against the lower frame, but it is preferable that the tiling unit is fixed to the lower frame.

Hereinafter, the construction of the tilting unit 1 according to an embodiment of the present invention will be described.

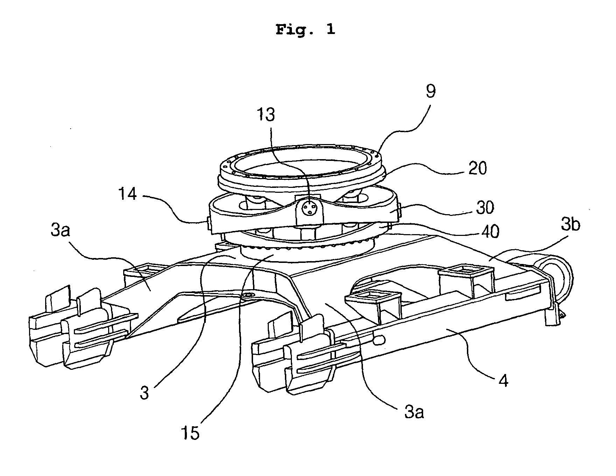

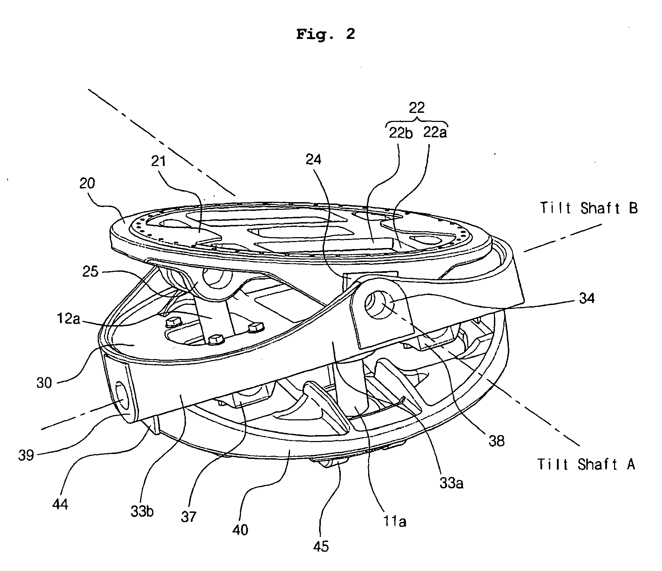

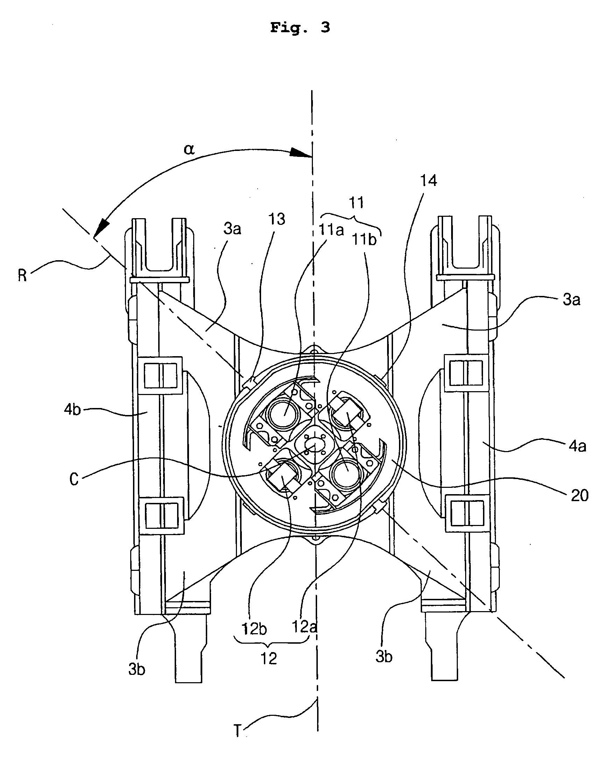

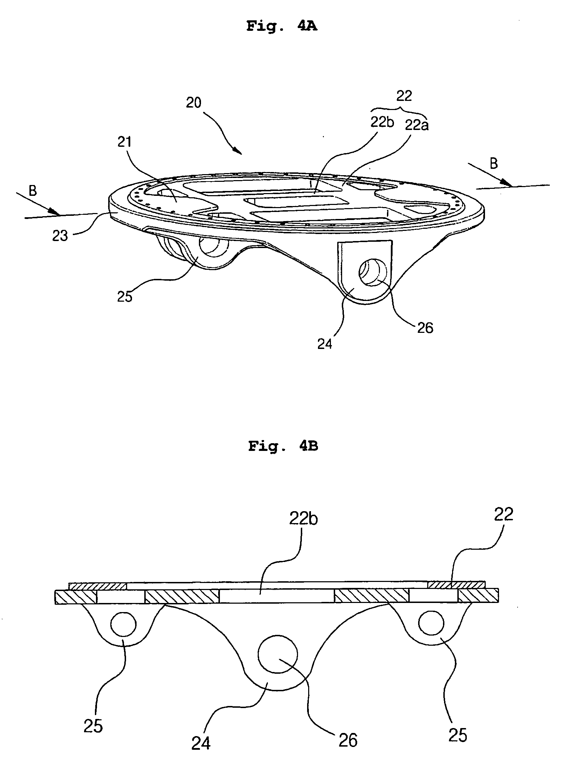

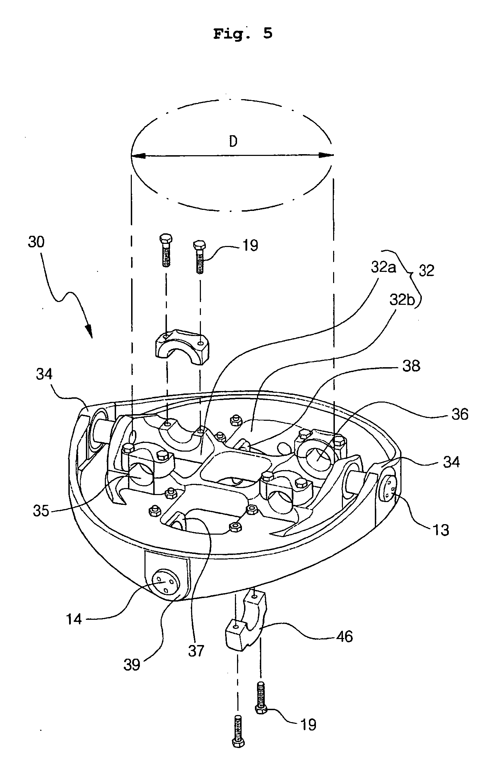

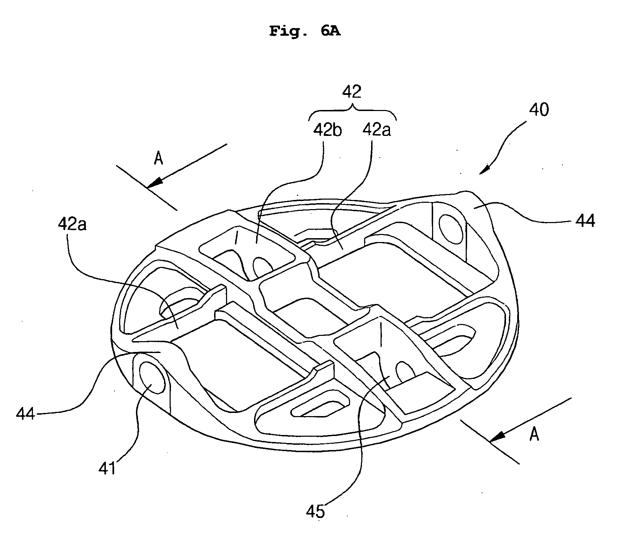

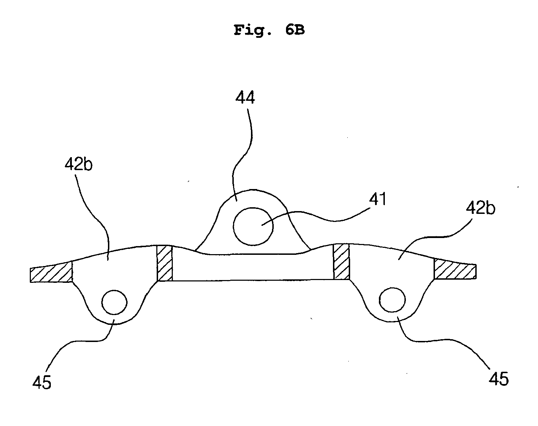

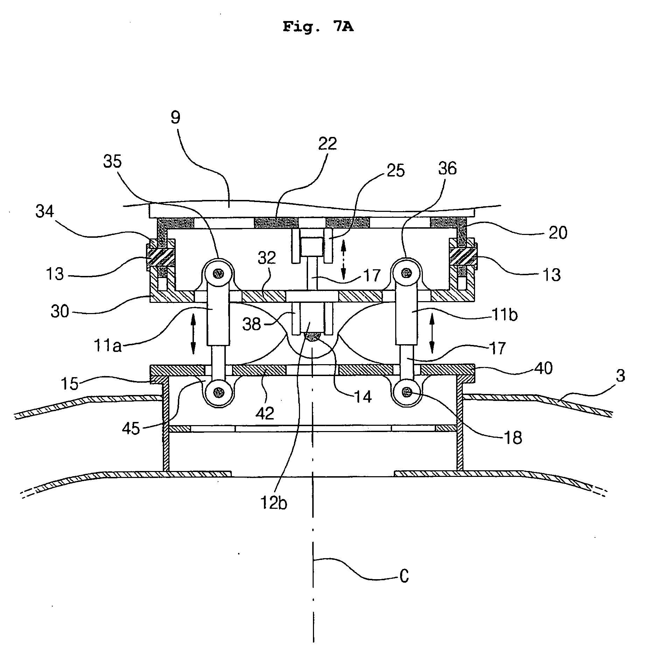

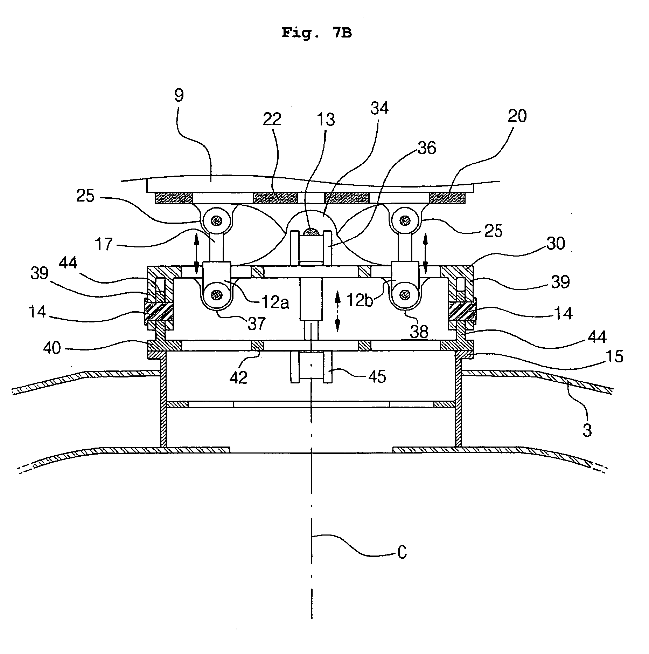

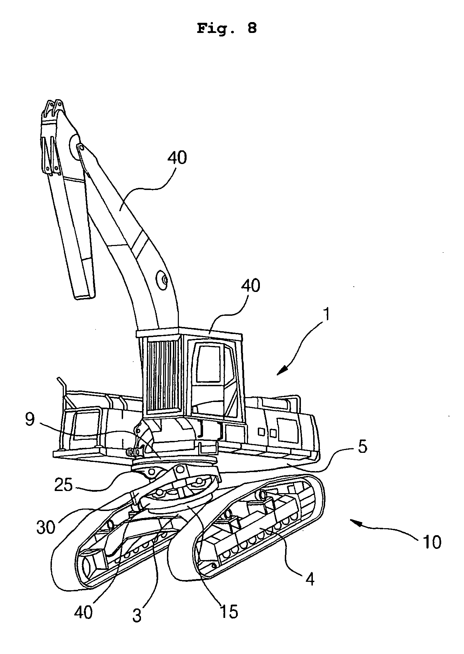

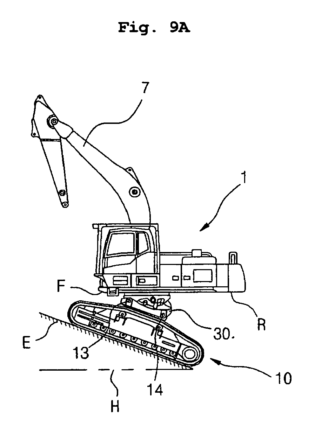

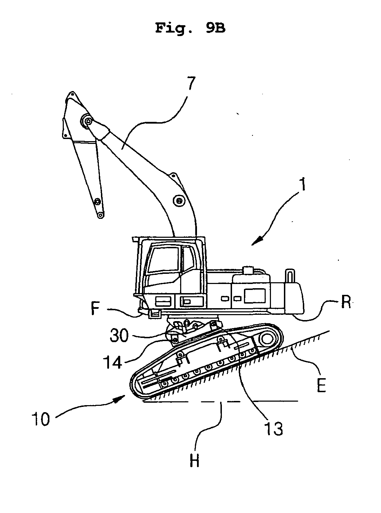

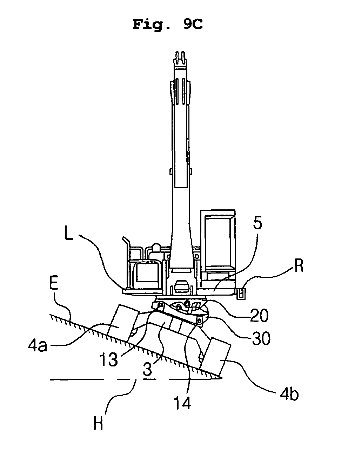

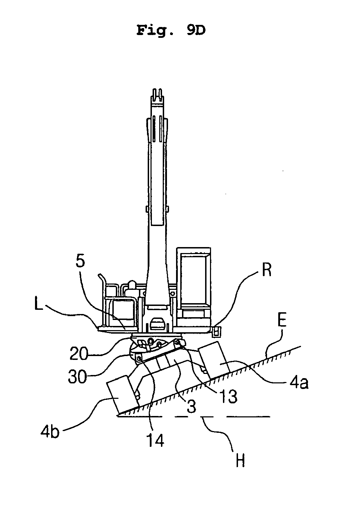

FIG. 1 is a perspective view schematically illustrating construction equipment to which the present invention is applied, FIG. 2 is a perspective view schematically illustrating a tilting unit to which the present is applied, and FIG. 3 is a plan view of a tilting unit explaining a mount structure of an actuator to which the present invention is applied. FIG. 4A is a perspective view schematically illustrating a swing bearing mounting plate of a tilting unit to which the present invention is applied, and FIG. 4B is a sectional view taken along line B-B of FIG. 4A. FIG. 5 is a partially exploded perspective view of a tilt plate of a tilting unit to which the present invention is applied, FIG. 6A is a perspective view of a tilting unit to which the present invention is applied, and FIG. 6B is a sectional view taken along line A-A of FIG. 6A. FIG. 7A is a sectional view illustrating the tilting unit on the basis of a tilt shaft A as illustrated in FIG. 2, and FIG. 7B is a sectional view illustrating the tilting unit on the basis of a tilt shaft B as illustrated in FIG. 2. FIG. 8 is a view illustrating the use state of a tilting unit to which the present invention is applied, and FIGS. 9A to 9D are views illustrating the use states of construction equipment keeping a leveling against inclined surfaces of the ground in every direction.

In the present invention, a tilt shaft means a center shaft connected to one end of an actuator to rock at maximum angle as the actuator extends or contracts. In the case where three actuators operate, three tilt shafts may be provided, and preferably, in the case where four actuators operate, two tilt shafts having both sides, each of which is connected to a pair of actuators, are provided.

A tilting unit is selectively attached to or detached from a lower part of a swing bearing 9 for construction equipment so that it controls a horizontal level of an upper swing frame 1 through controlling of the inclination or tilting of the upper swing frame when the tilting state of the equipment is changed due to a slope or a hill.

In the drawings, the reference numeral "10" denotes a lower frame, "20" denotes a swing bearing mounting plate, "30" denotes a tilt plate, and "40" denotes a support plate.

Referring to the accompanying drawings, the tilting unit is mounted between an upper swing frame 1 and a lower frame 3 formed on the lower driving structure 10 including a swing bearing 9 formed on a lower part of the upper swing frame 1, left and right track chassis 4a and 4b, and a front arm 3a and a rear arm 3b connected to upper parts of the track chassis 4a and 4b, to keep a horizontal level of the upper swing frame 1 against an inclined ground E.

The tilting unit includes a swing bearing mounting plate 20 tiltably mounted on a lower part of the swing bearing 9 and including a pair of pivot support parts 24 projecting in a downward direction of the swing bearing 9 to support a firs tilt shaft A and a pair of second piston holders 25; a support plate 40 fixedly installed on an upper part of the lower frame 3 that tilts in accordance with the inclination of the ground E, and having a pair of pivot support parts 44 projecting to support a second tilt shaft B and a pair of first piston holders 45; a tilt plate 30 mounted between the swing bearing mounting plate 20 and the support plate 40 to be tilted, and including a pair of first pivot holders 34 formed to project upward from one end part 33a of a main body, a pair of second pivot holders 39 formed to project downward from the other end 33b of the main body and to be radially apart from the first pivot holders 34, a first shaft 13 rotatably fixing the first pivot holders 34 and the pivot support parts 24 of the swing bearing mounting plate 20 to form the first tilt shaft A, and a second shaft 14 rotatably fixing the second pivot holders 39 and the pivot support parts 44 of the support plate 40 to form the second tilt shaft B crossing the first tilt shaft A in different directions; and a pair of first actuators 11a and 11b one side of which is fixed to the tilt plate 30 to rock the first tilt shaft A during their expansion and contraction, and a pair of second actuators 12a and 12b fixed to rock one side of the swing bearing mounting plate 20 during their expansion and contraction; wherein the tilt plate 30 includes a vertical center line C crossing a center line T in a length direction of the lower frame 3, and the respective actuators 11a, 11b, 12a, and 12b are installed to be radially apart from the vertical center line C.

Here, the actuators radially positioned around the center of the tilting unit may be coupled to both sides of respective tilt shafts which are substantially orthogonal to each other in 'x' shape in plan view so that the tilt shafts seesaw. Preferably, the respective actuators 11a, 11b, 12a, and 12b are fixedly installed on the tilt plate 30 substantially at intervals of 90° radial-apart around a vertical center line C. In the present invention, the term "substantially 90°" includes "accurately 90°" and "approximately 90°" which is almost orthogonal in appearance. Specifically, "substantially 90°" may be concretely in the range of 80°~100°, preferably in the range of 85°~95°, more preferably in the range of 88°~92°, and most preferably 90°.

As illustrated in FIG. 3, it is preferable that at least a pair of the actuators among the first actuators 11a and 11b and the second actuators 12a and 12b are installed opposite to each other on a oblique line R drawn on a left or right side that is at an angle of about 40°~50° to the center line T in the length direction of the lower frame 3.

In some cases, it can be understood that if the first actuators 11a and 11b are installed opposite to each other on the oblique line R rotated to a left side that is at an angle of about 45° to the center line T of the tilt plate 30, i.e. if one actuator 11a of the pair is installed on the side of the front arm 3a and the other actuator 11b is installed on the side of the rear arm 3b that is at an angle of 180° to the actuator 11a to face the actuator 11a, the other pair of second actuators 12a and 12b may be installed opposite to each other on a oblique line Rotated to a right side that is at an angle of about 45° to the center line T in the same manner.

On the other hand, according to the tilting unit, a pair of first cylinder holders 35 and 36 are provided on the tilt plate 30 to support the first actuators 11a and 11b so that the first actuators 11a and 11b can be extended and contracted downward, and a pair of second cylinder holders 37 and 38 are provided on the tilt plate 30 to support the second actuators 12a and 12b so that the second actuators 12a and 12b can be extended and contracted upward.

When the first actuators 11a and 11b are extended and contracted downward, the first pivot holder 34 and the pivot support part 24 of the swing bearing 9 are moved upward and downward to change the tilt angle of the swing bearing mounting plate 20. When the second actuators 12a and 12b are extended and contracted upward, the second piston holder 25 of the swing bearing 9 is moved upward and downward to change the tilt angle of the swing bearing mounting plate 20.

In explaining the tilting unit, the tilt angle of the swing bearing mounting plate 20 includes an angle and a tilt of the swing bearing mounting plate 20 required to keep a horizontal level of the upper swing frame 1 through offsetting of the inclination to a horizontal surface H.

Also, the tilt plate 30 is provided with a rib frame structure including a plurality of ribs 32a in a horizontal direction corresponding to the direction of the first tilt shaft A and a plurality of ribs 32b in a vertical direction corresponding to the direction of the second tilt shaft B, and the first cylinder holders 35 and 36 and the second cylinder holders 37 and 38 are formed to project from the ribs 32.

Preferably, the ribs 32a in the horizontal direction and the ribs 32b in the vertical direction, which are formed on the tilt plate 30, cross each other at predetermined intervals, the first cylinder holders 35 and 36 fixed to the ribs 32a in the horizontal direction are formed to project upward, and the second cylinder holders 37 and 38 fixed to the ribs 32b in the vertical direction are formed to project downward.

The first cylinder holders 35 and 36 and the second cylinder holders 37 and 38 formed to project upward and downward from the ribs 32 of the tilt plate 30 serve to disperse load, which is applied thereto when the first actuators 11a and 11b and the second actuators 12a and 12b are extended and contracted, through the ribs 32a in the horizontal direction and the rib 32b in the vertical direction of the tilt plate 30.

The second tilt shaft B is below the first tilt shaft A and crosses the first tilt shaft A roughly at an angle of 90°. In the present invention, the term "roughly 90°" has the same meaning as substantially 90°" as described above.

The actuators 11a, 11b, 12a, and 12b are provided with pistons 17 which expend and contract from a cylinder housing by hydraulic pressure.

Pistons 17 extending and contracting in the first actuators 11a and 11b are fixed to first piston holders 45 of the support plate 40, and pistons 17 extending and contracting in the second actuators 12a and 12b may be fixed to second piston holders 25 of the swing bearing mounting plate 20.

The support plate 40 is fixedly installed on a mounting plate 15 formed in the center of the lower frame 3, and it is proper to fix the support plate through a fixing member (not illustrated) including bolts and a welding means in consideration of its easy attachment and detachment.

With reference to FIG. 2, a coupling relation between the first shaft 13 and the second shaft 14 will be described. The first shaft 13 is provided in consideration of the maximum expansion and contraction range of the actuators and the corresponding interferences. The first shaft 13 is installed in a direction of a slanting line rotated to the left or right side that is at an angle of 40'~50', and preferably about 45°, to the center line T in the length direction of the lower frame 3 as in a plan view, and when the first actuators 11a and 11b are extended and contracted upward and downward, the first pivot holders 34 are moved upward and downward on the basis of the second shaft 14 that forms the second tilt shaft B to change the tilt angle of the swing bearing mounting plate 20.

The second shaft 14 is installed in a direction of a slanting line rotated to a left or right side that is at an angle of 40°~50°, and preferably about 45°, to the center line T in the length direction of the lower frame 3 as in a plan view, and when the second actuators 12a and 12b are extended and contracted upward and downward, the second piston holders 25 are moved upward and downward on the basis of the first shaft 13 that forms the first tilt shaft A to change the tilt angle of the swing bearing mounting plate 20.

In forming the first shaft 13 and the second shaft 14, it is preferable that the directions of the slanting lines coincide with the oblique line R in consideration of the upward/downward movement range of the tilt plate 30 and the swing bearing mounting plate 20 and the center of gravity of the upper swing frame 1 when the leveling is kept.

On the other hand, the support plate 40 is provided with a rib frame structure including a plurality of ribs 42b in a horizontal direction corresponding to the direction of the first tilt shaft A and a plurality of ribs 42a in a vertical direction corresponding to the direction of the second tilt shaft B, and the first piston holders 45 are formed to project downward from the ribs 42b in the horizontal direction to rotatably fix front end parts of the pistons 17 of the first actuators 11a and 11b.

The first piston holders 45 formed to project downward from the ribs 42 serve to disperse load, which is applied through the pistons 17 when the first actuators 11a and 11b are extended and contracted, through the ribs 42b in the horizontal direction and the ribs 42a in the vertical direction.

The swing bearing mounting plate 20 is provided with a rib frame structure including a plurality of ribs 22a in a horizontal direction corresponding to the direction of the first tilt shaft A and a plurality of ribs 22b in a vertical direction corresponding to the direction of the second tilt shaft B, and the second piston holders 25 are formed to project downward from the ribs 22b in the vertical direction to rotatably fix the pistons 17 of the second actuators 12a and 12b.

The second piston holders 25 formed to project downward from the ribs 22 of the swing bearing mounting plate 20 serve to disperse a force or load, which is applied through the pistons 17 when the second actuators 12a and 12b are extended and contracted, through the ribs 22b in the vertical direction and the ribs 22a in the horizontal direction.

As illustrated in FIG. 5, the first cylinder holders 35 and 36 and the second cylinder holders 37 and 38 are provided inside a diameter D that is formed when inner surfaces of the first pivot holders 34 are radially extended. In diverse embodiments of the tilting unit, in order to install the first and second actuators 11a, 11b, 12a, and 12b, it is possible to install a separate bracket or a trunnion on the outside of the first cylinder holders 35 and 36 and the second cylinder holders 37 and 38.

In an embodiment of the tilting unit, as illustrated in FIG. 3, in the case where a pair of first shafts 13 that form the first tilt shaft A are installed to face each other on a oblique line R rotated to the left side that is at an angle of about 40°~50° to the center line T in the length direction of the lower frame 3 as in a plan view, the first cylinder holders 35 and 36, which are provided with typical rotary pin members, are formed on an upper part of the tilt plate 30 to be apart from each other at an interval of 180° corresponding to the oblique line R, the second cylinder holders 37and 38 are formed on a lower part of the tilt plate 30 to be apart from each other at an interval of 180° corresponding to the oblique line R, and the first and second actuators 11a, 11b, 12a, and 12b, which maintain the above-described arrangement structure, are mounted to be extended and contracted in the first cylinder holders 35 and 36 and the second cylinder holders 37 and 38.

Also, as illustrated in FIGS. 1 to 3, and 7, in the case of fixedly installing the support plate 40 on the upper part of the lower frame 3 or the upper part of the mounting plate 15, it is preferable that a pair of first pivot holders 34 projecting upward from the tilt plate 30 at a specified height and a pair of second pivot holders 39 are formed at an interval of about 90° as in a plan view, or the first tilt shaft A is arranged in a direction of a slanting line rotated to the left side that is at an angle of about 45° to the center line T in the length direction of the lower frame 3.

In constructing the tilting unit, it can be understood that the center line T in the length direction of the lower frame 3 includes a track center line formed roughly in the center of the length of the typical track chassis 4a and 4b, and it is possible to move the vertical center line C of the tilt frame 30 and the oblique line R on the lower frame 3 in consideration of the movement of the upper swing frame 1 and its center of gravity.

In explaining the tilting unit, the swing bearing mounting plate 20 can be attached to and detached from the swing bearing 9 through a bolting assembly in accordance with various specifications of the conventional swing bearing, and a penetration part for installing therein a turning joint, a hydraulic pipe, and an electric device, and the like, may be further formed roughly in the center of the swing bearing mounting plate 20.

The unexplained reference numeral "14" denotes the second shaft that is shaft-engaged with the second pivot holder 39 of the tilt plate 30 and an engagement hole 41 of the pivot support part 44 of the support plate 40, "18" denotes a piston fixing pin member for fixing the piston holders 25 and 45, "19" denotes a cylinder fixing pin member for fixing the actuators 11a, 11b, 12a, and 12b to the cylinder holders 36, 36, 37, and 38, respectively, "26" denotes a fixing hole for engaging with a bolt for fixing the swing bearing, and "46" denotes a cylinder holder cover for fixing an actuator housing.

Hereinafter, the operation principle and effect of the tilting unit will be described.

The tilting unit is typically operated by a hydraulic pump connected to an engine.

As illustrated in FIGS. 1 to 3, the support plate 40 is mounted on the upper part of the mounting plate 15 formed roughly in the center of the lower frame 3 connected to the left and right track chassis 4a and 4b. On the upper part of the support plate 40, the pivot support parts 44 of the support plate 40 and the second pivot holders 39 of the tilt plate 30 are formed to be tilted at a specified angle by the second shaft 14, and on the upper part of the tilt plate 30, the first pivot holders 34 and the pivot support parts 24 of the swing bearing mounting plate 20 are formed to be tilted at a specified angle by the first shaft 13, so that the upper swing frame 1 and the swing bearing 9 are supported on the upper part of the swing bearing mounting plate 20 through driving forces of the first actuators 11a and 11b and the second actuators 12a and 12b.

When the lower driving structure 10 moves on the ground E that is inclined against the horizontal surface H, the first shaft 13 and the second shaft 14 act as the first tilt shaft A and the second tilt shaft B, which have different heights and cross each other, and by the expansion and contraction of the first actuators 11a and 11b and the second actuators 12a and 12b, the swing bearing mounting plate 20 performs a predetermined up/down seesaw movement along directions of the first tilt shaft A and the second tilt shaft B to change the tilt angle.

For example, when the first actuators 11a and 11b are extended and contracted on the oblique line R rotated at an angle of about 40°~50° to the oblique line R, a pair of first pivot holders 34 radially apart from each other on the both end parts 33a of the tilt plate 30 and the pivot support parts 24 of the swing bearing mounting plate 20 perform a seesaw movement around the center line (which means the first tilt shaft A) of the second shaft 14 to create up/down displacements, and thus the tilt angle of the swing bearing mounting plate 20 is changed.

Preferably, when the pair of first actuators 11a and 11b and the pair of second actuators 12a and 12b are successively or simultaneously extended and contracted upward and downward in a state that they keep an interval of 90° in a clockwise direction around the vertical center line C of the tilt plate 30, the swing bearing mounting plate 20 makes an angle change required for the horizontal leveling of the upper swing frame 1 in accordance with the inclination of the ground E through the up/down displacements of the first shaft 13 and the second shaft 14 formed on the tilt plate 30.

For example, in the case where the second tilt shaft B is in a horizontal state, but the first tilt shaft A is in an inclined state against the ground E due to the inclination of the ground in the middle of the equipment's going downhill, the first shaft side 13 of the tilt plate 30 that is coupled to the swing bearing mounting plate 20 performs seesaw movements around the second shaft 14 so as to offset the inclination of the first tilt shaft A.

In this case, referring to FIG. 7A, the piston 17 of the first actuator 11a (on the left side in the drawing) fixed to the first cylinder holder 35 of the tilt plate 30 is extended, and simultaneously, the piston 17 of the first actuator 11b (on the right side in the drawing) fixed to the first cylinder holder 36 of the tilt plate 30 is contracted.

Accordingly, the first pivot holder 34 of the tilt plate 30 and the pivot support part 24 of the swing bearing mounting plate 20, which are coupled to each other by the first shaft, perform left/right seesaw movements around the second shaft 14 (which means the second tilt shaft B), and the tilting angle of the swing bearing mounting plate 20 is controlled until the inclination of the ground E is offset, so that the horizontal level of the swing bearing 9 and the upper swing frame 1 is kept to coincide with the horizontal surface E.

Here, the load being applied to the tilt plate 30 and the support plate 40 during the expansion and contraction of the first actuators 11a and 11b is dispersed by the rib frame structure formed on the respective ribs 32 and 42 through the first cylinder holders 35 and 26 and the first piston holders 45 of the support plate 40.

Also, since the first actuators 11a and 11b can be extended and contracted upward/downward at maximum on the left side or the right side that is at an angle of about 40°~50° to the center line T in the length direction of the lower frame 3, the rear part R of the upper swing frame 1 appears not to collide or interfere with the track chassis 4a and 4b of the lower frame 3.

In other words, even in the case of installing the first actuators 11a and 11b or the second actuators 12a and 12b adjacent to the center line T in the length direction of the left/right lower frame 3, a danger of interference or collision of the lower part of the upper swing frame 1 with the left and right track chassis 4a and 4b can be removed.

On the other hand, in the case where the first tilt shaft A is in a horizontal state, but the second tilt shaft B is inclined against the ground E, both end parts 23 of the swing bearing mounting plate 20 perform seesaw movements around the first shaft 13 so as to offset the inclination of the second tilt shaft B.

That is, as illustrated in FIG. 7B, the second actuator 12a on the left side as in the drawing is extended on the second piston holder 25 adjacent to one end part 23 of the swing bearing mounting plate 20, and simultaneously, the second actuator 12b on the right side as in the drawing is contracted.

Accordingly, even if the tilt plate 30 and the support frame 40 are inclined on the upper part of the lower frame 3, the left side and the right side of the swing bearing mounting plate 20 perform right/left seesaw movements around the first shaft 13 (which means the first tilt shaft A), and the tilting angle of the swing bearing mounting plate 20 is controlled until the inclination of the ground E is offset, so that the horizontal level of the swing bearing 9 and the upper swing frame 1 is kept to coincide with the horizontal surface E.

On the other hand, as illustrated in FIGS. 9A to 9D, in the case where the upper swing frame 1 is tilted to front and rear sides corresponding to the center line T in the length direction of the lower frame 3 or to left and right sides due to the inclination of the ground E, both the first tilt shaft A and the second tilt shaft B are inclined against the ground E, and in this case, it is required for the first shaft 13 and the second shaft 14 to simultaneously or successively perform seesaw movements.

That is, both the first actuators 11a and 11b and the second actuators 12a and 12b are extended and contracted to push or pull the pivot support sides 24 and the second piston holders 25 of the swing bearing mounting plate 20 so that the upper swing frame 1 is kept at the horizontal level as a danger of the collision or interference of the front (F), rear (R), left (L), or right (R) side of the lower part of the upper swing frame 1 is removed.

At this time, for the change of the tilt angle, the rocking movements of the swing bearing mounting plate 20 and the tilt plate 30 are performed as the actuators 11a, 11b, 12a, and 12b fixed to the cylinder holders 35, 36, 37, and 38 of the tilt plate 30, respectively, are alternately or successively extended and contracted, or almost simultaneously driven. Since the upward/downward seesaw movements are performed around the first shaft 13 and the second shaft 14 in the same manner during such a tilt operation, the detailed description thereof will be omitted.

According to an embodiment of the tilting unit, the tilt plate 30 and the support plate 40 are installed on the mounting plate 15 formed roughly in the center of the lower frame 3, the first actuators 11a and 11b are installed opposite to each other on the oblique line R drawn on the right side that is at an angle of 45° to the center line T in the length direction of the lower frame 3, and the leveling range of the equipment in every direction is adjusted over 20° against the horizontal surface H when the second actuators 12a and 12b are opposite to each other on the left side that is at an angle of 45°.

According to the tilting unit, the tilt range of the upper swing frame 1 that is mounted on the upper part of the swing bearing mounting plate 20 does not lean upon the inclined area in the left/right direction of the equipment or the inclined area in the front/rear direction, but is roughly symmetrically applied, so that the capacity and the size of the actuators are relatively reduced in comparison to the conventional structure with the height of the equipment kept lowered.

The expansion and contraction of the first actuators 11a and 11b and the second actuators 12a and 12b as described above may be diversely modified through an algorithm preset to control the flow rate or the size of the cylinders in accordance with the tilt angle of the upper swing frame required during the movement of the equipment on the inclined ground E.

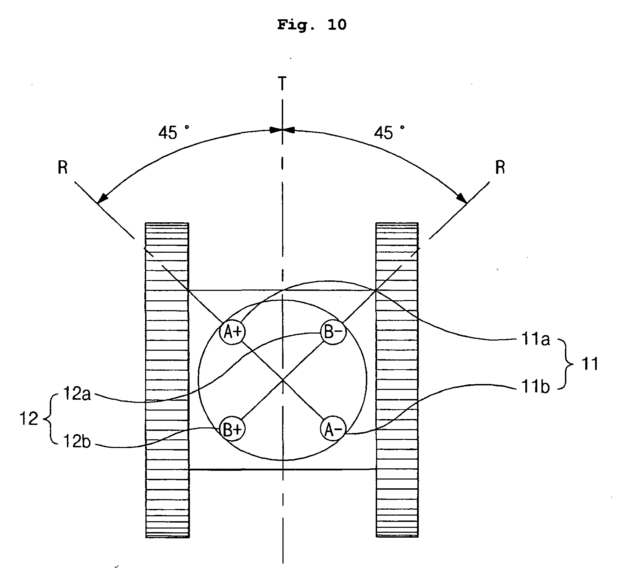

Hereinafter, the position where the tilting unit, to which the present invention is applied, is formed will be described in more detail. Referring to FIGS. 3 and 10, four actuators 11a, 11b, 12a, and 12b are positioned on an upper left side (simply indicated as "A+"), a lower left side (simply indicated as "B+"), an upper right side (simply indicated as "B-"), and a lower right side (simply indicated as "A-"), respectively. The respective actuators are installed to face each other on radial lines R drawn on the left side or right side apart by 45° from the center line T in the length direction of the lower frame.

In operation, one of A+ actuator 11a and A- actuator 11b extends and the other thereof contracts, while one of B+ actuator 12b and B- actuator 12a extends and the other thereof contracts.

Hereinafter, the construction and operation of a manual leveling control system for construction equipment according to a preferred embodiment of the present invention will be described in detail.

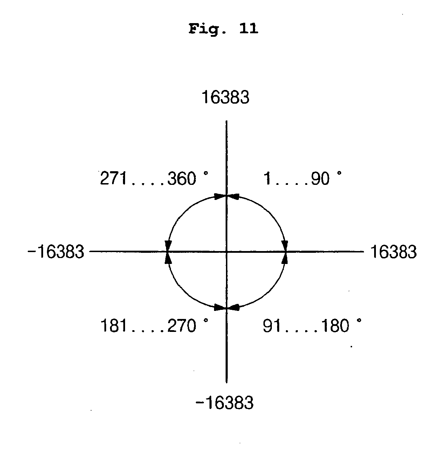

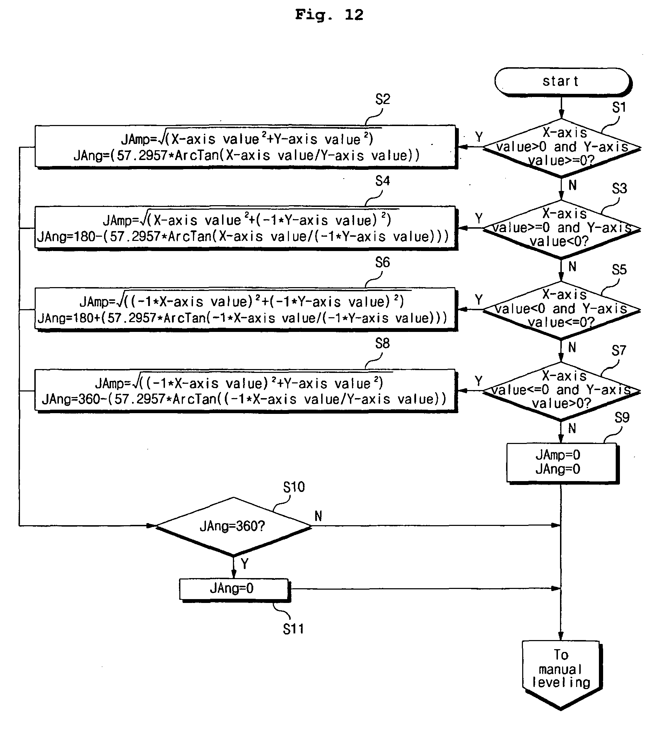

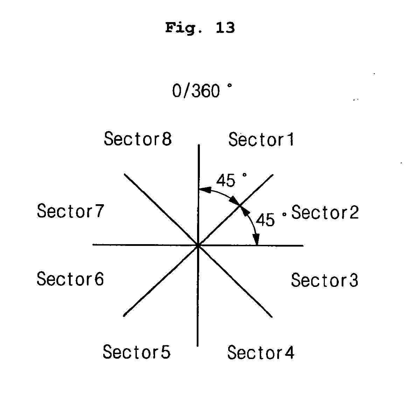

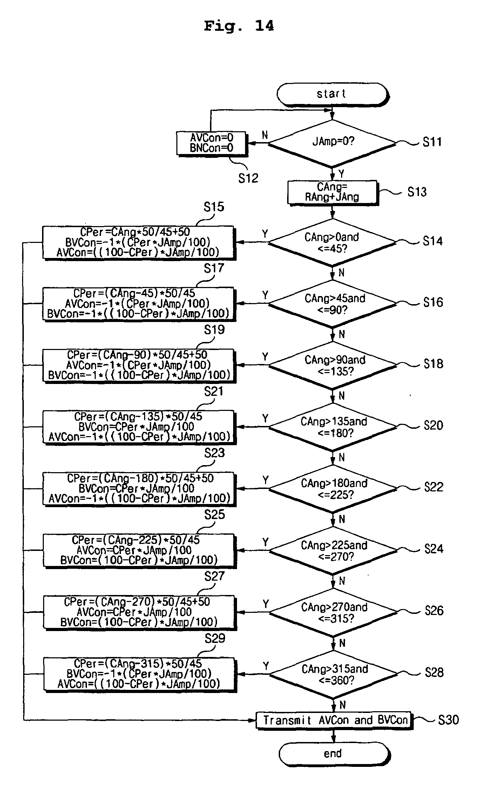

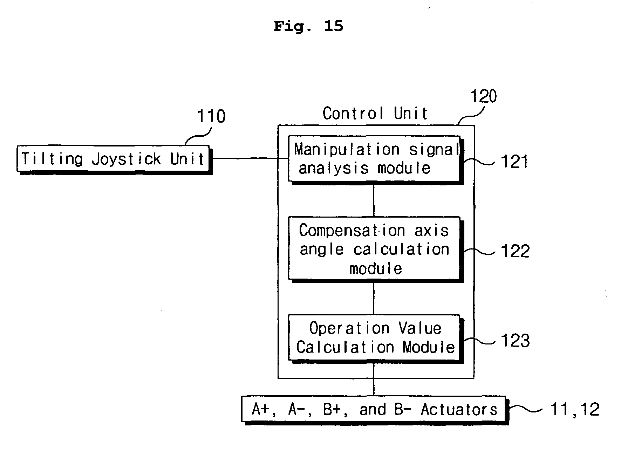

FIG. 10 is a plan view schematically illustrating a lower frame and a tilting unit to which the present invention is applied, and FIG. 11 is a view illustrating coordinates of a tilting manipulation input unit according to a preferred embodiment of the present invention. FIG. 12 is a flowchart illustrating a coordinate value conversion process of a tilting manipulation input unit according to a preferred embodiment of the present invention, FIG. 13 is a view illustrating operation sectors for calculating operation values according to a preferred embodiment of the present invention, and FIG. 14 is a flowchart illustrating a operation value calculating process according to a preferred embodiment of the present invention. FIG. 15 is a block diagram illustrating a manual leveling system for construction equipment according to a preferred embodiment of the present invention.

The manual leveling control system 100 for construction equipment according to a preferred embodiment of the present invention includes a swing angle sensing unit (not illustrated) sensing a swing angle of the upper swing frame and transmitting a signal for the sensed swing angle; a tilting manipulation input unit (not illustrated) generating and transmitting a tilting manipulation signal corresponding to coordinate values on a coordinate system, having coordinate axes corresponding to left/right direction and front/rear direction of the upper swing frame, in accordance with a position manipulated by a user; and a control unit 120 determining target actuators to be operated among actuators radially positioned around the center of the tilting unit from the coordinate values of the tilting manipulation signal and the swing angle of the upper swing frame, and calculating operation values for determining whether to extend/contract the target actuators and operation ranges of the target actuators, in order to tilt the upper swing frame against a reference surface in accordance with the tilting manipulation signal.

The tilting manipulation input unit includes a tilting manipulation input device 110 such as a tilting joystick as illustrated in FIG. 5. The tilting manipulation input device 110 may be in the form of a trackball, and preferably in the form of a tilting joystick.

The tilting manipulation input device 110 of the tilting manipulation input unit is vertically positioned in plan view if a user does not manipulate the device. The user tilts the tilting manipulation input device to a desired direction, and a manipulation command is generated in accordance with the direction and degree of tilting. At this time, in consideration of the coordinates composed of X axis corresponding to the right/left direction and Y axis corresponding to the front/rear direction of the upper swing frame, the displaced position of the tilting manipulation input unit is expressed as coordinate values. In the embodiment of the present invention, the coordinate values of the tilting manipulation input unit are expressed as an X-axis value and a Y-axis value, or an angle of the corresponding coordinates against the X axis or Y axis and a size value from the original point.

Referring to the coordinates as illustrated in FIG. 11, the manipulation command means coordinate values inputted as the tilting manipulation input device 110 is tilted, and the maximum range value of the respective axis, i.e. the maximum input size value of the tilting manipulation input device 110, may be determined, for example, as "16383" as illustrated in FIG. 11 for user's convenience. This numerical value may be defined as a numerical value suitable to calculate an electric signal value for operating the actuators at maximum, and the scope of the present invention is not reduced or limited by the above-described value "16383". The maximum ranges of the respective axes may be changed in accordance with the concrete application of the present invention.

On the other hand, the control unit 120 includes a manipulation signal analysis module 121 calculating an angle of the coordinates and a coordinate distance or size from the coordinate values of the tilting manipulation signal of the tilting manipulation input unit, a compensation axis angle calculation module 122 calculating a compensation axis angle that is the basis of selecting the actuators from the coordinate angle and the swing angle of the upper swing frame, and an operation value calculation module 123 calculating operation values of the respective actuator for determining whether the actuator extends or contracts and the operation range from the compensation axis angle and the coordinate distance or size.

The manipulation signal analysis module 121 outputs the coordinate angle and the coordinate distance or size from the original point to the coordinate point, and the coordinate distance or size outputted from the manipulation signal analysis module 121 corresponds to an upward or downward tilting angle of the upper swing frame to be compensated or an ascending or descending length of one side of the tilting unit on a tilting compensation axis in accordance with the upward or downward tilting angle to be compensated.

In an embodiment of the present invention, the manipulation signal analysis module 121 receives the coordinate values transmitted from the tilting manipulation input unit, and calculates the angle of the coordinates rotated clockwise about the axis based on the front part of the upper swing frame, and the coordinate distance or size *JAmp* that is the distance (or size) from the original point to the coordinate point.

In an embodiment of the present invention, if the coordinate angle is determined as 0°~360° based on the clockwise rotation and the coordinate values are in the range of $0 < (X - axis\ value)(x)$ and $0 \le (Y - axis\ value)(y)$, the coordinate size *JAmp* is calculated by $JAmp = \sqrt{x^2 + y^2}$ , and the coordinate angle *JAng* is calculated by

$$JAng = [57.2957 \times ArcTan(\frac{x}{y})]$$ through the manipulation signal analysis module. Here, the constant "57.2957" is to calculate the radian value by the arctangent in terms of degrees, and accurately corresponds to $180/\pi$. The proper change of such constant values is apparent to those skilled in the art.

If the coordinate values are in the range of $0 \leq$ (*X - axis value*)(*x*) and $0 >$ (*Y - axis value*)(*y*), the coordinate size *JAmp* is calculated by $JAmp = \sqrt{x^2 + (-y)^2}$ , and the coordinate angle *JAng* is calculated by

$$JAng = 180 - [57.2957 \times ArcTan(\frac{x}{-y})]$$ .

If the coordinate values are in the range of $0 >$ (*X - axis value*)(*x*) and $0 \geq$ (*Y - axis value*)(*y*), the coordinate size *JAmp* is calculated by $JAmp = \sqrt{(-x)^2 + (-y)^2}$ , and the coordinate angle *JAng* is calculated by

$$JAng = 180 + [57.2957 \times ArcTan(\frac{-x}{-y})]$$ .

If the coordinate values are in the range of $0 \geq$ (*X - axis value*)(*x*) and $0 <$ (*Y - axis value*)(*y*), the coordinate size *JAmp* is calculated by $JAmp = \sqrt{(-x)^2 + y^2}$ , and the coordinate angle *JAng* is calculated by

$$JAng = 360 - [57.2957 \times ArcTan(\frac{-x}{y})]$$ .

Meanwhile, if the coordinate values are in the range of (*X - axis value*) = 0 and (*Y - axis value*) = 0, the coordinate size *JAmp* is calculated as '0' and the coordinate angle *JAng* is calculated as '0'.

If the coordinate angle is calculated as '360', the coordinate angle is calculated as '0' since 360° and 0° have the same meaning.

In other embodiments of the present invention, the coordinate angle may be determined in a different range, e.g. in the range of -180°~180°.

The compensation axis angle calculation module 122 calculates a compensation axis angle that is the basis of selection of the actuators to be operated from the coordinate angle and the swing angle of the upper swing frame, and the compensation axis angle indicates a plane angle between the tilting compensation axis on a horizontal surface of the upper swing frame and a reference axis of the reference surface, wherein the tilting compensation axis forms a tilting angle to be compensated between the reference surface and the horizontal surface of the upper swing frame. Here, the reference surface means a surface that is the basis of leveling of the inclined upper swing frame, and preferably is a surface perpendicular to the direction of gravity. Also, the reference axis of the reference surface becomes the basis for making a tilting angle for the tilting compensation of the upper swing frame. Preferably, the reference axis coincides with the front direction axis of the lower frame in plan view.

Since the compensation axis angle includes the current swing angle of the upper swing frame, the basis of tilting is changed from the lower frame to the upper swing frame. In an embodiment of the present invention, the compensation axis angle is calculated as coordinate angle + swing angle of upper swing frame".

In an embodiment of the present invention, the front direction axis of the lower frame that is the basis of the swing angle coincides with the direction of the reference axis of the reference surface, the coordinate angle is measured on the basis of the positive Y axis that is the front direction of the upper swing frame, and an angle having the same sign as the swing angle refers to the same direction as the swing angle while an angle having an opposite sign to the swing angle refers to an opposite direction to the swing angle. Also, the reference axis is a vertical axis along lengthwise direction in plan view, which passes through the center of an 'X' -shaped cross plane of the tilt shafts, an upper side thereof refers to a positive direction, and the compensation axis angle is calculated as the sum of the coordinate angle and the swing angle.

The operation value calculation module 123 determines whether to extend or contract the respective actuators, and calculates operation values for determining the operation range of the respective actuators in consideration of the compensation axis angle and the coordinate distance or size JAmp. In an embodiment of the present invention, the operation value calculation module 123 calculates operation values for controlling the actuators connected to both sides of the same tilt shaft so as to be extended/contracted and vice versa with the same operation range.

In an embodiment of the present invention, the operation values can be calculated by dividing the operation region into sectors in accordance with the compensation axis angle on the basis of the tilt shaft on the 'x'-shaped plane crossing the tilt shaft. In this case, the positive sign of the operation value makes the actuator operate in the same direction as the tilting direction to be compensated in the coordinate direction according to the tilting manipulation signal, while the negative sign of the operation value makes the actuator operate in the opposite direction. That is, a downward tilting signal makes the actuator positioned in tilting manipulation direction contract, while the upward tilting signal makes the actuator positioned in tilting manipulation direction extend.

Here, by substantially describing a circular arc having a radius r through connection of points where the actuators joint the tilt shafts, the maximum ascending or descending length or height can be calculated on the above-described circular arc of the tilting unit to be tilted from the coordinate distance or size. If it is assumed that the maximum ascending or descending length or height on the circular arc of the tilting unit is denoted by h, operation values as follows can be roughly obtained using the linear ratio of the length of the circular arc to the ascending or descending height. Here, $\alpha$ is the size value of the compensation axis angle. In the case of manipulating the tilting manipulation input device to be tilt-compensated so that the tilting unit is tilted in a direction of the manipulation coordinates, i.e. downward, the positive sign of the operation value makes the actuators contract, while the negative sign of the operation value makes the actuator ascend. Here, since operation values of A+ and B+ actuators have the same absolute values as those of A- and B- actuators, but have a sign different from that of A- and B- actuators, A+ and B+ actuators extend/contract in a manner opposite to A- and B- actuators. In the following embodiment of the present invention, the length of the circular arc in selecting the compensation axis angle range and calculating the operation values may be differently set in accordance with the accurate crossing angle of the tilt shafts, and such changes are apparent to those of ordinary skill in the art.

i) If the compensation axis angle is more than -45° and less than 45°, i.e. if the size of the compensation axis angle $\alpha$ is in the range of $-45 \leq \alpha < 45$, the operation value $A_v^+$ of A+ actuator is obtained as $A_v^+ = \dfrac{45-\alpha}{90} \times h$

from $\dfrac{\pi}{2} r : h = (\dfrac{\pi}{4} - \dfrac{\pi}{180} \times \alpha) r : A_v^+$, and the operation value $B_v^-$ of B- actuator is obtained as $B_v^- = \dfrac{45+\alpha}{90} \times h$ from $\dfrac{\pi}{2} r : h = (\dfrac{\pi}{4} + \dfrac{\pi}{180} \times \alpha) r : B_v^-$.

ii) If the compensation axis angle is more than 45° and less than 135°, i.e. if the compensation axis angle $\alpha$ is in the

range of $45 \leq \alpha < 135$, the operation value $A_v^+$ of A+ actuator is obtained as $A_v^+ = -\dfrac{\alpha-45}{90} \times h$ from

$\dfrac{\pi}{2} r : h = -(\dfrac{\pi}{180} \times \alpha - \dfrac{\pi}{4}) r : A_v^+$, and the operation value $B_v^-$ of B- actuator is obtained

as $B_v^- = \dfrac{135-\alpha}{90} \times h$ from $\dfrac{\pi}{2} r : h = [\pi - (\dfrac{\pi}{4} + \dfrac{\pi}{180} \times \alpha)] r : B_v^-$.

iii) If the compensation axis angle is in the range of $135 \leq \alpha < 225$ in a state that the compensation axis angle in the range of $135 \leq \alpha < 180$ or in the range of $-180 \leq \alpha < -135$ is the same as the compensation axis angle in the range of 135≤α<225, the operation value $A_v^+$ of A+ actuator is obtained as $A_v^+ = -\dfrac{225-\alpha}{90} \times h$ from

$$\dfrac{\pi}{2}r : h = -(\dfrac{5\pi}{4} - \dfrac{\pi}{180} \times \alpha)r : A_v^+$$

and the operation value $B_v^-$ of B- actuator is obtained

as $B_v^- = -\dfrac{\alpha-135}{90} \times h$ from $\dfrac{\pi}{2}r : h = -(\dfrac{\pi}{180} \times \alpha - \dfrac{3\pi}{4})r : B_v^-$.

iv) If the compensation axis angle is more than -135° and less than -45°, i.e. if the compensation axis angle $\alpha$ is in the range of -135≤α<-45, the operation value $A_v^+$ of A+ actuator is obtained as

$$A_v^+ = \dfrac{135-|\alpha|}{90} \times h = \dfrac{135+\alpha}{90} \times h$$

from

$$\dfrac{\pi}{2}r : h = (\dfrac{3\pi}{4} - \dfrac{\pi}{180} \times |\alpha|)r : A_v^+$$

and the operation value $B_v^-$ of B- actuator is obtained as $B_v^- = -\dfrac{|\alpha|-45}{90} \times h = \dfrac{\alpha+45}{90} \times h$ from

$$\dfrac{\pi}{2}r : h = -(\dfrac{\pi}{180} \times |\alpha| - \dfrac{\pi}{4})r : B_v^-.$$

Also, in another embodiment of the present invention, in accordance with the arrangement characteristics of the first and second actuators of the tilting unit to which the present invention is applied, as illustrated in FIG. 13, operation sectors sector1 to sector8 are dividedly arranged at intervals of 45° on the basis of the front direction of the upper swing frame, and in the operation sectors, operation values related to the operation direction of the respective actuators are calculated.

More specifically, operation angles *CPer* in consideration of the arrangement positions and operable ranges of the respective actuators are defined in accordance with the size of the compensation axis angle, and the operation values for determining whether to extend/contract the respective actuators and the operation ranges of the actuators are calculated as the following control values by considering the operation angles *CPer* and the coordinate distance or size *JAmp* as variables.

In accordance with the operation sectors as illustrated in FIG. 13, the operation angles *CPer,* control values *AVCon* of A+ and A- actuators, and control values *BVCon* of B+ and B-actuators are calculated as follows. In obtaining the operation angles, the multiplication of the compensation axis angle by 50/45 is to calculate the angle value in the range of 45° in terms of percentage, and if needed, '50' is added for each operation sector to calculate the angle value in terms of percentage. As the operation angle is calculated in terms of percentage, the coordinate distance or size JAmp is divided by '100' in order to determine the operation value from the corrected value including the operation angle and the coordinate distance or size *JAmp* in consideration of the operation sectors. It is apparent that the selection of such numerical values can be diversely changed.

Operation Sector 1: In the range of 0 < *Compensation Axis Angle* ≤ 45 ,

the operation angle *CPer* is calculated by $CPer = CAng \times \dfrac{50}{45} + 50$, the control value *AVCon* of A+ actuator by *AVCon*=[(100-*CPer*)×*JAmp*/100], and calculating the control value *BVCon* of B+ actuator by *BVCon*= -1 × (*CPer* × *JAmp*/100).

Operation Sector 2: In the range of 45 < *Compensation Axis Angle* ≤ 90 ,

the operation angle *CPer* is calculated by $CPer = (CAng - 45) \times \dfrac{50}{45}$, the control value *AVCon* of A+ actuator by *AVCon*= -1 × (*CPer* × *JAmp*/100), and calculating the control value *BVCon* of B+ actuator by *BVCon*= -1 × [(100-*CPer*) × *JAmp*/100].

Operation Sector 3: In the range of 90 < *Compensation Axis Angle* ≤ 135,

the operation angle *CPer* is calculated by $CPer = (CAng - 90) \times \dfrac{50}{45} + 50$, the control value *AVCon* of A+ actuator by *AVCon*= -1 × (*CPer* × *JAmp*/100), and calculating the control value *BVCon* of B+ actuator by *BVCon*= -1 × [(100-*CPer*) × *JAmp*/100].

Operation Sector 4: In the range of 135 < *Compensation Axis Angle* ≤ 180,

the operation angle *CPer* is calculated by $CPer = (CAng - 135) \times \dfrac{50}{45}$, the control value *AVCon* of A+ actuator by *AVCon* = -1 × [(100-*CPer*) × *Jamp*/100], and calculating the control value *BVCon* of B+ actuator by *BVCon*=*CPer* × *JAmp*/100.

Operation Sector 5: In the range of 180 < *Compensation Axis Angle* ≤ 225 ,

the operation angle *CPer* is calculated by $CPer = (CAng - 180) \times \dfrac{50}{45} + 50$, the control value *AVCon* of A+ actuator by *AVCon* = -1 × [(100-*CPer*) × *JAmp*/100], and calculating the control value *BVCon* of B+ actuator by *BVCon*=*CPer* × *JAmp*/100.

Operation Sector 6: In the range of 225 < *Compensation Axis Angle* ≤ 270 ,

the operation angle *CPer* is calculated by $CPer = (CAng - 225) \times \dfrac{50}{45}$, the control value *AVCon* of A+ actuator by *AVCon*=*CPer* × *JAmp*/100, and calculating the control value *BVCon* of B+ actuator is calculated by *BVCon*=(100-*CPer*) × *JAmp*/100.

Operation Sector 7: In the range of 270 < *Compensation Axis Angle* ≤ 315 ,

the operation angle *CPer* is calculated by $CPer = (CAng - 270) \times \dfrac{50}{45} + 50$, the control value *AVCon* of A+ actuator by *AVCon*=*CPer* × *JAmp*/100, and calculating the control value *BVCon* of B+ actuator by *BVCon*=(100-*CPer*) × *JAmp*/100.

Operation Sector 8: In the range of 315 < *Compensation Axis Angle* ≤ 359 ,

the operation angle *CPer* is calculated by $CPer = (CAng - 315) \times \dfrac{50}{45}$, the control value *AVCon* of A+ actuator by *AVCon*=[(100 - *CPer*) × *JAmp*/100], and calculating the control value *BVCon* of B+ actuator by *BVCon*= -1 × (*CPer* × *JAmp*/100).

In addition, in the range of *Compensation Axis Angle* = 0 ,
the operation angle *CPer* is calculated by *CPer*=50, the control value *AVCon* of A+ actuator by *AVCon*=[(100 - *CPer*) × *JAmp*/100], and calculating the control value *BVCon* of B+ actuator by *BVCon*= -1 × (*CPer* × *JAmp*/100).

The control value *AVCon* of A+ and A- actuators and the control value *BVCon* of B+ and B- actuators as calculated above have values of '0', a positive number, or a negative number. The control values function as the operation values for operating the actuators.

In this case, if the tilting manipulation signal for the tilting compensation means an downward tilting control, the A+ or B+ actuators contract and the A- or B- actuators extend in the case where the control value *AVCon* or *BVCon* is a positive number, while the A+ or B+ actuators extend and the A- or B-actuators contract in the case where the control value *AVCon* or *BVCon* is a negative number.

That is, A+ actuator and A- actuator are positioned opposite to each other, and if any one of A+ and A- actuators extends, the other thereof contracts. In other words, their operation lengths are the same, but their operations (including expansion and contraction) are opposite to each other. Such construction is also applied to the B+ and B- actuators in the same manner. Accordingly, if the control values *AVCon* and *BVCon* are determined as the operation values, the expansion/contraction of the respective actuators are determined in accordance with the sign of the control values or the operation values, and the operation range of the respective actuators is determined in accordance with the size of the operation values.

Hereinafter, a manual leveling control method for construction equipment according to a preferred embodiment of the present invention will be described in detail.

The manual leveling control method for construction equipment having a tilting unit that is coupled between a lower frame having a traveling means and an upper swing frame having a cab and is so operated by actuators as to tilt the upper swing frame, wherein the upper swing frame swivels against the tilting unit, according to a preferred embodiment of the present invention includes (A) receiving a tilting manipulation signal corresponding to position coordinate values generated in accordance with a manipulation of a tilting manipulation input device, and calculating a coordinate angle and a coordinate distance or size from an original point to a coordinate point on a coordinate system having coordinate axes corresponding to left/right direction and front/rear direction of the upper swing frame; (B) calculating a compensation axis angle from the coordinate angle and the swing angle of the upper swing frame, wherein the compensation axis angle indicates in plan view an angle between a reference axis of the reference surface and a tilting compensation axis on a horizontal surface of the upper swing frame, wherein the tilting compensation axis forms a tilting angle to be compensated between the reference surface and the horizontal surface of the upper swing frame; and (C) calculating an operation value for determining whether to extend/contract an actuator and an operation range of the actuator, which is determined as target actuators to be operated among actuators radially positioned around the center of the tilting unit, from the coordinate distance or size and the compensation axis angle, in order to tilt the upper swing frame against the reference surface in accordance with the tilting manipulation signal.

Preferably, in the manual leveling control method for construction equipment, if the position coordinate values are expressed as the coordinate angle against any one coordinate axis and the coordinate distance or size from the original point to the coordinate point, the step (A) outputs the coordinate angle and the coordinate distance or size from the tilting manipulation signal of the position coordinate values.

In an embodiment of the present invention, if the coordinate values are expressed as X, Y coordinate values of a coordinate system having an X axis representing the left/right direction of the upper swing frame and a Y axis representing the front/rear direction of the upper swing frame, the step (A) calculates the coordinate angle against any one coordinate axis and the coordinate distance or size from the original point to the coordinate point, from the X, Y coordinate values. In this case, the step (A) includes receiving an input of the coordinate values (i.e. X-axis value and Y-axis value) in the coordinates composed of the X axis representing the left/right direction of the upper swing frame and the Y axis representing the front/rear direction of the upper swing frame, and calculating the position of the tilting manipulation input device as the coordinate angles in accordance with the coordinate values (i.e. the X-axis value and the Y-axis value) on the basis of the coordinate distance or size that is the length from the original point of the coordinates and the positive Y axis (steps s1 to s11). Since the details of calculation of the position of the tilting manipulation input device as the coordinate angles in accordance with the coordinate values (i.e. the X-axis value and the Y-axis value) on the basis of the coordinate distance or size that is the length from the original point of the coordinates and the positive Y axis are the same as described above, a duplicate description thereof will be omitted.

Preferably, the coordinate distance of size outputted in step (A) corresponds to the upward or downward tilting angle of the upper swing frame to be compensated or the ascending or descending length of one side of the tilting unit on the tilting compensation axis in accordance with the upward or downward tilting angle to be compensated.

The step (B), if the coordinate distance or size *JAmp* is '0', returns to the step (A), and sets the operation values AVCon and BVCon of the actuators to '0' to make the actuators stop if no user manipulation command is inputted, so that a state of waiting for the manipulation command in accordance with the user's manipulation of the tilting manipulation input device is maintained (steps s11 to s12).

If the manipulation command is inputted to the tilting manipulation input device and thus the coordinate distance or size *JAmp* is not '0', the step (B) calculates the compensation axis angle from the coordinate angle and the swing angle of the upper swing frame against the lower frame. Details of this operation are as described above.

In an embodiment of the present invention, the step (B) calculates the compensation axis angle as "compensation axis angle = coordinate angle + swing angle of upper swing frame" (step s13).

On the other hand, the step (C) divides the operation region into sectors in accordance with the compensation axis angle, and calculates i.e. the operation value $A^+_v$ of A+ actuator, the operation value $B^-_v$ of B- actuator.

Since details of this operation are as described above, the duplicate description thereof will be omitted.

Furthermore, in another embodiment of the present invention, the step (C) divides the operation region into sectors in accordance with the compensation axis angle, and calculates the operation angle *CPer,* the control value *AVCon* of A+ and A- actuators, the control value *BVCon* of B+ and B-actuators for the respective operation sectors (steps s14 to s29). Since details of this operation are as described above, the duplicate description thereof will be omitted.

For example, if the tilting manipulation signal for the tilting compensation means the downward tilting control, and the control value *AVCon* of A+ actuator and the control value *BVCon* of B+ actuators are positive numbers, the step (C) sends the operation command to contract A+ and B+ actuators as much as the corresponding operation value and to extend the A- and B- actuators, while if the control values are negative numbers, the step (C) sends the operation command to extend A+ and B+ actuators as much as the corresponding operation value and to contract the A- and B-actuators (step s30). If the downward tilting is compensated in the tilting manipulation coordinate direction in accordance with the tilting manipulation signal, the positive value corresponds to the contraction of the actuators and the negative value corresponds to the expansion of the actuators.

As described above, according to the manual leveling control system and method for construction equipment according to embodiments of the present invention, since the manual tilting is performed by user's manipulation of the tilting manipulation input unit in accordance with the user's recognition based on the upper swing frame, confusion in operation of the construction equipment is prevented to increase the safety, and the tilting manipulation becomes convenient.

Although a preferred embodiment of the present invention has been described for illustrative purposes, those skilled in the art will appreciate that various modifications, additions and substitutions are possible, without departing from the scope of the invention as disclosed in the accompanying claims.

**Claims**

1. A manual leveling control system for construction equipment having a tilting unit that is coupled between a lower frame (3) having a traveling means and an upper swing frame (1) having a cab and is so operated by actuators as to tilt the upper swing frame (1), wherein the upper swing frame (1) swivels against the tilting unit, the manual leveling control system comprising:

   a swing angle sensing unit sensing a swing angle of the upper swing frame (1) and transmitting a signal for the sensed swing angle;
   a tilting manipulation input unit generating and transmitting a tilting manipulation signal corresponding to coordinate values on a coordinate system, having coordinate axes corresponding to left/right direction and front/rear direction of the upper swing frame (1), in accordance with a position manipulated by a user; and
   a control unit (120) determining target actuators to be operated among actuators radially positioned around the center of the tilting unit from the coordinate values of the tilting manipulation signal and the swing angle of the upper swing frame (1), and calculating operation values for determining whether to extend/contract the target actuators and operation ranges of the target actuators, in order to tilt the upper swing frame (1) against a reference surface in accordance with the tilting manipulation signal; **characterized in that**:
   the control unit comprises:

   a manipulation signal analysis module outputting an angle of the coordinates and a coordinate distance or size from an original point to a coordinate point in accordance with the coordinate values;
   a compensation axis angle calculation module calculating a compensation axis angle from the coordinate angle and the swing angle of the upper swing frame (1), wherein the compensation axis angle indicates in plan view an angle between a reference axis of the reference surface and a tilting compensation axis on a horizontal surface of the upper swing frame (1), wherein the tilting compensation axis forms a tilting angle to be compensated between the reference surface and the horizontal surface of the upper swing frame (1); and
   an operation value calculation module calculating operation values of the target actuators to be operated from the coordinate distance or size and the compensation axis angle.

2. The manual leveling control system of claim 1, wherein the actuators being radially positionable around the center of the tilting unit are respectively coupleable to both sides of tilt shafts which are substantially orthogonal to each other in 'X' shape in plan view so that the tilt shafts seesaw;
the coordinate distance or size outputted from the manipulation signal analysis module corresponds to an upward or downward tilting angle of the upper swing frame (1) to be compensated or an ascending or descending length of one side of the tilting unit on the tilting compensation axis in accordance with the upward or downward tilting angle to be compensated; and
the operation value calculation module calculates the operation values for controlling the actuators connected to both sides of the same tilt shaft so as to be extended/contracted and vice versa with the same operation range.

3. A manual leveling control method for construction equipment having a tilting unit that is coupled between a lower frame (3) having a traveling means and an upper swing frame (1) having a cab and is so operated by actuators as to tilt the upper swing frame (1), wherein the upper swing frame (1) swivels against the tilting unit, the manual leveling control method comprising:

   (A) receiving a tilting manipulation signal corresponding to position coordinate values generated in accordance with a manipulation of a tilting manipulation input device (110), and calculating a coordinate angle and a coordinate distance or size from an original point to a coordinate point on a coordinate system having coordinate axes corresponding to left/right direction and front/rear direction of the upper swing frame;
   (B) calculating a compensation axis angle from the coordinate angle and the swing angle of the upper swing frame (1), wherein the compensation axis angle indicates in plan view an angle between a reference axis of the reference surface and a tilting compensation axis on a horizontal surface of the upper swing frame (1), wherein the tilting compensation axis forms a tilting angle to be compensated between the reference surface and the horizontal surface of the upper swing frame (1); and
   (C) calculating an operation value for determining whether to extend/contract an actuator and an operation range of the actuator, which is determined as target actuators to be operated among actuators radially positioned around the center of the tilting unit, from the coordinate distance or size and the compensation axis angle, in order to tilt the upper swing frame (1) against the reference surface in accordance with the tilting manipulation signal; **characterized in that**

the step (A) comprises:

   if the position coordinate values are expressed as the coordinate angle against any one coordinate axis and the coordinate distance or size from the original point to the coordinate point, outputting the coordinate angle and the coordinate distance or size from the tilting manipulation signal of the position coordinate values; and
   if the coordinate values are expressed as X, Y coordinate values of a coordinate system having an X axis representing the left/right direction of the upper swing frame and a Y axis representing the front/rear direction of the upper swing frame (1), calculating the coordinate angle against any one coordinate axis and the coordinate distance or size from the original point to the coordinate point, from the X, Y coordinate values.

4. The manual leveling control method of claim 3, wherein the actuators radially positioned around the center of the tilting unit are A+ actuator and A- actuator coupled to both sides of one of tilt shafts which are substantially orthogonal to each other in '×' shape in plan view so that the tilt shafts seesaw, and B+ actuator and B- actuator coupled to both sides of the other tilt shaft;
the coordinate distance or size outputted in the step (A) corresponds to an upward or downward tilting angle of the upper swing frame (1) to be compensated or an ascending or descending length of one side of the tilting unit on the tilting compensation axis in accordance with the upward or downward tilting angle to be compensated; and
the step (C) calculates the operation values for controlling the actuators connected to both sides of the same tilt shaft so as to be extended/contracted and vice versa with the same operation range.

5. The manual leveling control method of claim 4, wherein an axis in the front direction of the lower frame that is the basis of the swing angle coincides with the direction of the reference axis of the reference surface;
the coordinate angle is measured on the basis of a positive Y axis that corresponds to the front direction of the upper swing frame (1), and an angle having the same sign as the swing angle refers to the same direction as the swing angle while an angle having an opposite sign to the swing angle refers to an opposite direction to the swing angle;
the reference axis is a vertical axis along lengthwise direction in plan view, which passes through the center of an 'X'-shaped cross plane of the tilt shafts, and an upper side thereof refers to a positive direction, and
the compensation axis angle is calculated as the sum of the coordinate angle and the swing angle.

6. The manual leveling control method of claim 5, wherein the step (C) divides an operation region into sectors in accordance with the compensation axis angle on the basis of the tilt shafts on the 'x' -shaped cross plane;

if it is assumed that the upper left side actuator of the tilt shaft arranged from the upper left side of the reference axis to the lower right side is denoted as A+ actuator and the upper right side actuator of the tilt shaft arranged from the upper right side of the reference axis to the lower left side is denoted as B- actuator, A- and B+ actuators are controlled to be extended or contracted in opposite manner to the A+ and B- actuators;

the positive sign of the operation value makes the actuators operate in the same direction as the tilting direction to be compensated in the coordinate direction according to the tilting manipulation signal, that is, a downward tilting signal makes the actuators contract and an upward tilting signal makes the actuators extend, while the negative sign of the operation value makes the actuators operate in the opposite direction;

the maximum ascending or descending length h of the tilting unit to be tilt-compensated on a circular arc having a radius of r is calculated from the coordinate distance or size, wherein the radius of r is formed as connecting points where the actuators joint the tilt shafts are connected;

i) if the compensation axis angle is more than -45° and less than 45°, i.e. if the size of the compensation axis angle $\alpha$ is in the range of $-45 \leq \alpha \leq 45$, the operation value $A_v^+$ of A+ actuator is obtained as

$$A_v^+ = \frac{45-\alpha}{90} \times h \quad \text{from} \quad \frac{\pi}{2} r : h = (\frac{\pi}{4} - \frac{\pi}{180} \times \alpha)r : A_v^+ ,$$

and the operation value $B_v^-$ of B- actuator is obtained as $B_v^- = \frac{45+\alpha}{90} \times h$ from

$$\frac{\pi}{2} r : h = (\frac{\pi}{4} + \frac{\pi}{180} \times \alpha)r : B_v^- ;$$

ii) if the compensation axis angle is more than 45° and less than 135°, i.e. if the compensation axis angle $\alpha$ is in the range of $45 \leq \alpha \leq 135$, the operation value $A_v^+$ of A+ actuator is

obtained as $A_v^+ = -\frac{\alpha-45}{90} \times h$ from $\frac{\pi}{2} r : h = -(\frac{\pi}{180} \times \alpha - \frac{\pi}{4})r : A_v^+ ,$ and the operation value $B_v^-$ of B- actuator is obtained as $B_v^- = \frac{135-\alpha}{90} \times h$ from

$$\frac{\pi}{2} r : h = [\pi - (\frac{\pi}{4} + \frac{\pi}{180} \times \alpha)]r : B_v^- ;$$

iii) if the compensation axis angle is in the range of $135 \leq \alpha < 225$ in a state that the compensation axis angle in the range of $135 \leq \alpha < 180$ or in the range of $-180 \leq \alpha < -135$ is the same as the compensation axis angle in the

range of $135 \leq \alpha < 225$, the operation value $A_v^+$ of A+ actuator is obtained as $A_v^+ = -\frac{225-\alpha}{90} \times h$ from

$$\frac{\pi}{2} r : h = -(\frac{5\pi}{4} - \frac{\pi}{180} \times \alpha)r : A_v^+ ,$$

and the operation value $B_v^-$ of B- actuator is ob-

tained as $B_v^- = - \dfrac{\alpha - 135}{90} \times h$ from $\dfrac{\pi}{2} r : h = -(\dfrac{\pi}{180} \times \alpha - \dfrac{3\pi}{4}) r : B_v^-$ and ;

iv) if the compensation axis angle is more than -135° and less than -45°, i.e. if the contpensation axis angle a is in the range of $-135 \le \alpha < 45$, the operation value $A_v^+$ of A+ actuator is obtained as

$$A_v^+ = \frac{135 - |\alpha|}{90} \times h = \frac{135 + \alpha}{90} \times h$$ from

$$\frac{\pi}{2} r : h = (\frac{3\pi}{4} - \frac{\pi}{180} \times |\alpha|) r : A_v^+$$ and the operation value $B_v^-$ of B- actuator is obtained as $$B_v^- = - \frac{|\alpha| - 45}{90} \times h = \frac{\alpha + 45}{90} \times h$$ from

$$\frac{\pi}{2} r : h = -(\frac{\pi}{180} \times |\alpha| - \frac{\pi}{4}) r : B_v^-$$

**7.** The manual leveling control method of claim 5, wherein the step (C) divides an operation region of the respective actuator into 8 parts in accordance with the range of the compensation axis angle on the basis of the tilt shaft on the 'x'-shaped cross plane, the reference axis, and a horizontal axis perpendicular to the reference axis and passing through a cross center; calculates an operation angle CPer for limiting the operation range in accordance with the sector where the actuator is positioned from the compensation axis angle CAng in the range of 0-360; calculates control values AVCon of the A+ and A- actuators and control values BVCon of the B+ and B-actuators as the operation values on the basis of the operation angle and the coordinate distance or size; and control values of the A- and B- actuators are opposite with control values of the A+ and B+ actuators;

(C1) in the range of 0 < *Compensation Axis Angle* ≤ 45, calculating the operation angle *CPer* by

$$CPer = CAng \times \frac{50}{45} + 50$$ calculating the control value *AVCon* of A+ actuator by *AVCon*=[(*100 -*

*CPer*)×*JAmp*/*100*], and calculating the control value *BVCon* of B+ actuator by *BVCon*=-1×(*CPer*×*JAmp*/100);
(C2) in the range of 45 <*Compensation Axis Angle* ≤ 90, calculating the operation angle *CPer* by

$$CPer = (CAng - 45) \times \frac{50}{45}$$ calculating the control value *AVCon* of A+ actuator by *AVCon =*

-1×(*CPer*×*JAmp*/100), and calculating the control value *BVCon* of B+ actuator by *BVCon*= -1 × (140-*CPer*)×*JAmp*/100];;
(C3) in the range of 90 < *Compensation Axis Angle* ≤ 135, calculating the operation angle *CPer* by

$$CPer = (CAng - 90) \times \frac{50}{45} + 50$$ calculating the control value *AVCon* of A+ actuator by *AVCon*= -1 ×

(*CPer* × *JAmp*/100), and calculating the control value *BVCon* of B+ actuator by *BVCon*= -1 × [(100-*CPer*)×*JAmp*/100];
(C4) in the range of 135 < *Compensation Axis Angle* ≤ 180, calculating the operation angle CPer by

$$CPer = (CAng - 135) \times \frac{50}{45}$$ , calculating the control value *AVCon* of A+ actuator by *AVCon*=-1×[(100-*CPer*)×*JAmp*/100], and calculating the control value *BVCon* of B+ actuator by *BVCon*=*CPer*×*JAmp*/100];

(C5) in the range of *180 < Compensation Axis Angle* ≤ 225, calculating the operation angle *CPer* by

$$CPer=(CAng-180)\times\frac{50}{45}+50$$ , calculating the control value *AVCon* of A+ actuator by *AVCon=*

1×[(100-*CPer*)×*JAmp*/100], and calculating the control value *BVCon* of B+ actuator by *BVCon=CPer*×*JAmp*/100;

(C6) in the range of 225 < *Compensation Axis Angle* ≤ 270, calculating the operation angle *CPer* by

$$CPer=(CAng-225)\times\frac{50}{45}$$ , calculating the control value *AVCon* of A+ actuator by *AVCon=CPer*×*JAmp*/100, and calculating the control value *BVCon* of B+ actuator is calculated by *BVCon=*(100-*CPer*)×*JAmp*/100;

(C7) in the range of 270 < *Compensation Axis Angle* ≤ 315, calculating the operation angle *CPer* by

$$CPer=(CAng-270)\times\frac{50}{45}+50$$ , calculating the control value *AVCon* of A+ actuator by *AVCon=CPer*×*JAmp*/100, and calculating the control value *BVCon* of B+ actuator by *BVCon=*(100-*CPer*)×*JAmp*/100;

(C8) in the range of 315 < *Compensation Axis Angle* ≤ 359, calculating the operation angle *CPer* by

$$CPer=(CAng-315)\times\frac{50}{45}$$ , calculating the control value *AVCon* of A+ actuator by *ATCon* = [(100 - *CPer*)×*JAmp*/100], and calculating the control value *BVCon* of B+ actuator by *BVCon=*-1×(*CPer*×*JAmp*/100); and

(C9) in the range of *Compensation Axis Angle* = 0, calculating the operation angle *CPer* by *CPer*=50, calculating the control value *AVCon* of A+ actuator by *AVCon=*[(100 - *CPer*)×*JAmp*/100], and calculating the control value *BVCon* of B+ actuator by *BVCon=* -1×(*CPer*×*JAmp*/100).

**Patentansprüche**

1. Manuelles Nivellierungssteuerungssystem für Baumaschinen umfassend eine Kippeinrichtung, die zwischen einem unteren Rahmen (3) umfassend ein Fahrmittel und einem oberen Schwenkrahmen (1) umfassend einen Führerstand gekoppelt ist und derart von Aktuatoren betätigt wird, um den oberen Schwenkrahmen (1) zu kippen, wobei sich der obere Schwenkrahmen (1) gegen die Kippeinrichtung dreht, wobei das manuelle Nivellierungssteuerungssystem folgendes umfasst:

eine Einrichtung zur Erfassung des Schwenkwinkels, die einen Schwenkwinkel des oberen Schwenkrahmens (1) erfasst und ein Signal für den ermittelten Schwenkwinkel überträgt;
eine Einrichtung zur Eingabe der Kippmanipulation, die ein Kippmanipulationssignal herstellt und überträgt, das Koordinatenwerten an einem Koordinatensystem entspricht, umfassend Koordinatenachsen entsprechend der Links-Rechts-Richtung und in der Vorwärts-Rückwärts-Richtung des oberen Schwenkrahmens (1) gemäss einer von einem Benutzer manipulierten Position; und
eine Steuerungseinrichtung (12a) zur Ermittlung der zu betätigenden Zielaktuatoren aus Aktuatoren, die um das Zentrum der Kippeinrichtung radial angeordnet sind, nämlich aus den Koordinatenwerten des Kippmanipulationssignals und aus dem Schwenkwinkel des oberen Schwenkrahmens (1), und zur Berechnung der Betriebswerte, um zu ermitteln, ob die Zielaktuatoren aus- beziehungsweise eingefahren und die Betriebsbereiche der Zielaktuatoren vergrößert beziehungsweise reduziert werden sollen, um den oberen Schwenkrahmen (1) im Verhältnis zu einer Soll-Oberfläche je nach dem Kippmanipulationssignal zu kippen; **dadurch gekennzeichnet, dass**
die Steuereinheit die folgende Bauteile enthält:

ein Modul zur Analyse des Manipulationssignals, zur Ausgabe eines Winkels der Koordinaten und einer Koordinatenentfernung oder -größe von einem ursprünglichen Punkt bis zu einem Koordinatenpunkt entsprechend der Koordinatenwerte;

ein Berechnungsmodul des Winkels einer Kompensationsachse, zur Berechnung eines Winkels der Kompensationsachse aus dem Koordinatenwinkel und dem Schwenkwinkel des oberen Schwenkrahmens (1) wobei der Winkel der Kompensationsachse in Draufsicht einen Winkel zwischen einer Soll-Achse der Soll-Oberfläche und einer Kippkompensationsachse auf einer horizontalen Oberfläche des oberen Schwenkrahmens (1) bezeichnet, wobei die Kippkompensationsachse einen zu kompensierenden Kippwinkel zwischen der Soll-Oberfläche und der horizontalen Oberfläche des oberen Schwenkrahmens (1) bildet; und

ein Berechnungsmodul des Betriebswerts, zur Berechnung der Betriebswerte der zu betreibenden Zielaktuatoren aus der Koordinatenentfernung oder -größe und dem Winkel der Kompensationsachse.

2. Manuelles Nivellierungssteuerungssystem nach Anspruch 1, wobei die Aktuatoren, die um das Zentrum der Kippeinrichtung radial positionierbar sind, jeweils mit den beiden Seiten von Kippwellen koppelbar sind, die 'X'-förmig in einer Draufsicht zueinander im Wesentlichen senkrecht sind, sodass die Kippwellen wippen;

die Koordinatenentfernung oder -größe, die vom Modul zur Analyse des Manipulationssignals ausgegeben wird, einem oberen oder unteren Kippwinkel des oberen Schwenkrahmens (1) entspricht, der kompensiert werden soll, oder einer aufsteigenden oder absteigenden Länge einer Seiter der Kippeinrichtung auf der Kippkompensationsachse entsprechend des Aufwärts- oder Abwärtskippwinkels, der kompensiert werden soll; und das Berechnungsmodul der Betriebswerte die Betriebswerte berechnet und zwar zur Steuerung der Aktuatoren, die mit den beiden Seiten derselben Kippwelle gekoppelt sind, um aus oder eingefahren zu werden und umgekehrt mit dem selben Betriebsbereich.

3. Verfahren zur manuellen Nivellierungssteuerung für Baumaschinen umfassend eine Kippeinrichtung, die zwischen einem unteren Rahmen (3) umfassend ein Fahrmittel und einem oberen Schwenkrahmen (1) umfassend einen Führerstand gekoppelt ist und derart von Aktuatoren betätigt wird, um den oberen Schwenkrahmen (1) zu kippen, wobei sich der obere Schwenkrahmen (1) gegen die Kippeinrichtung dreht, wobei das manuelle Nivellierungssteuerungsverfahren die folgenden Schritte umfasst:

(A) Empfangen eines entsprechenden Kippmanipulationssignals entsprechen den Positions-Koordinatenwerten, die gemäss einer Manipulation einer Eingabevorrichtung (110) der Kippmanipulation erzeugt werden, und Berechnung eines Koordinatenwinkels und einer Koordinatenentfernung oder -größe von einem ursprünglichen Punkt bis zu einem Koordinatenpunkt auf einem Koordinatensystem umfassend Koordinatenachsen entsprechend der Links-Rechts-Richtung und der Vorwärts-Rückwärts-Richtung des oberen Schwenkrahmens (1);

(B) Berechnung eines Winkels einer Kompensationsachse aus dem Koordinatenwinkel und dem Schwenkwinkel des oberen Schwenkrahmens (1), wobei der Winkel der Kompensationsachse in Draufsicht einen Winkel zwischen einer Soll-Achse der Soll-Oberfläche und einer Kippkompensationsachse auf einer horizontalen Oberfläche des oberen Schwenkrahmens (1) bezeichnet, wobei die Kippkompensationsachse einen zu kompensierenden Kippwinkel zwischen der Soll-Oberfläche und der horizontalen Oberfläche des oberen Schwenkrahmens (1) bildet; und

(C) Berechnung eines Betriebswerts, zur Ermittlung ob ein Aktuator und ein Betriebsbereich des Aktuators aus- beziehungsweise eingefahren werden sollen, der als zu betätigende Zielaktuatoren aus Aktuatoren ermittelt wird, die um das Zentrum der Kippeinrichtung radial angeordnet sind, des der Koordinatenentfernung oder -größe und dem Winkel der Kompensationsachse, um den oberen Schwenkrahmen (1) im Verhältnis zur Soll-Oberfläche entsprechend dem Kippmanipulationssignal zu kippen;

**dadurch gekennzeichnet, dass**
der Schritt (A) folgendes umfasst:

wenn die Positionskoordinatenwerte als der Koordinatenwinkel im Verhältnis zu irgendeiner Koordinatenachse und als Koordinatenentfernung oder -größe vom ursprünglichen Punkt bis zum Koordinatenpunkt ausgedrückt werden, werden der Koordinatenwinkel und die Koordinatenentfernung oder -größe aus dem Kippmanipulationssignal der Positionskoordinatenwerte ausgegeben; und

wenn die Koordinatenwerte als X, Y-Koordinatenwerte eines Koordinatensystems ausgedrückt werden, umfassend eine X-Achse, die die Links-Rechts-Richtung des oberen Schwenkrahmens (1) darstellt, und eine Y-Achse, die die Vorwärts-Rückwärts-Richtung des oberen Schwenkrahmens (1) darstellt, Berechnen des Koordinatenwinkels im Verhältnis zu irgendeiner Koordinatenachse und der Koordinatenentfernung oder -größe vom ursprünglichen Punkt bis zum Koordinatenpunkt erfolgt, aus den X, Y-Koordinatenwerten.

**4.** Verfahren zur manuellen Nivellierungssteuerung nach Anspruch 3, wobei die Aktuatoren, die um das Zentrum der Kippeinrichtung radial angeordnet sind, ein A+_Aktuator und ein A-_Aktuator sind, die mit den beiden Seiten einer der Kippwellen gekoppelt sind, die 'X'-förmig in Draufsicht zueinander im Wesentlichen senkrecht sind, sodass die Kippwellen wippen, und ein B+_Aktuator und ein B-_Aktuator sind, die mit den beiden Seiten der anderen Kippwelle gekoppelt sind;

die Koordinatenentfernung oder -größe, die im Schritt (A) ausgegeben wird, einem zu kompensieren den Aufwärts- oder Abwärtskippwinkel des oberen Schwenkrahmens (1) entspricht, der kompensiert werden soll oder einer aufsteigenden oder absteigenden Länge einer Seite der Kippeinrichtung an der Kippkompensationsachse entsprechend dem zu kompensierenden Aufwärts- oder Abwärtskippwinkel, der kompensiert werden soll; und

der Schritt (C) berechnet die Betriebswerte, und zwar zur Steuerung der Aktuatoren, die mit den beiden Seiten derselben Kippwelle gekoppelt sind, um aus- oder eingefahren zu werden und umgekehrt mit demselben Betriebsbereich.

**5.** Verfahren zur manuellen Nivellierungssteuerung nach Anspruch 4, wobei eine Achse in der Vorwärtsrichtung des unteren Rahmens, die die Basis des Schwenkwinkels bildet, mit der Richtung der Soll-Achse der Soll-Oberfläche übereinstimmt;

der Koordinatenwinkel auf der Basis einer positiven Y-Achse bemessen wird, die der Vorwärtsrichtung des oberen Schwenkrahmens (1) entspricht und ein Winkel, der dasselbe Vorzeichen wie der Schwenkwinkel aufweist, sich auf dieselbe Richtung wie der Schwenkwinkel bezieht, während ein Winkel, der ein dem Schwenkwinkel entgegengesetztes Vorzeichen aufweist, sich auf eine dem Schwenkwinkel entgegengesetzte Richtung bezieht;

die Soll-Achse eine vertikale Achse entlang einer Längsrichtung in Draufsicht ist, die durch das Zentrum einer 'X'-förmigen Querebene der Kippwellen läuft, und eine obere Seite davon sich auf eine positive Richtung bezieht, und der Winkel der Kompensationsachse als die Summe des Koordinatenwinkels und des Schwenkwinkels berechnet wird.

**6.** Verfahren zur manuellen Nivellierungssteuerung nach Anspruch 5, wobei der Schritt (C) einen Betriebsbereich gemäß dem Winkel der Kompensationsachse auf der Basis der Kippwellen auf der 'X'-förmigen Querebene in Sektoren aufteilt;

wenn angenommen wird, dass der obere linksseitige Aktuator der Kippwelle, der von der oberen linken Seite der Soll-Achse bis zur unteren rechten Seite angeordnet ist, als A+_Aktuator bezeichnet wird, und dass der obere rechtsseitige Aktuator der Kippwelle, der von der oberen rechten Seite der Soll-Achse bis zur unteren linken Seite angeordnet ist, als B-_Aktuator bezeichnet wird, A- und B+_Aktuatoren gesteuert werden, um auf eine den A+ und B-_Aktuatoren entgegengesetzte Weise aus- oder eingefahren zu werden;

durch das positive Vorzeichen des Betriebswerts die Aktuatoren in derselben Richtung arbeiten wie die Kipprichtung, die in der Koordinatenrichtung gemäß dem Kippmanipulationssignal zu kompensieren ist, d.h., dass durch ein Abwärtskippsignal die Aktuatoren eingefahren werden und durch ein Aufwärtskippsignal die Aktuatoren ausgefahren werden, während durch das negative Vorzeichen des Betriebswerts die Aktuatoren in der entgegengesetzten Richtung arbeiten; die maximale aufsteigende beziehungsweise absteigende Länge h der zu kipp-kompensierenden Kippeinrichtung auf einem kreisförmigen Bogen mit einem Radius r aus der Koordinaten-entfernung oder -größe berechnet wird, wobei der Radius von r als Verbindungspunkte gebildet ist, wo die Kippwellen verbindenden Aktuatoren angeschlossen sind;

i) wenn der Winkel der Kompensationsachse mehr als -45° und weniger als 45° beträgt, d.h. wenn die Grösse

des Winkels $\alpha$ der Kompensationsachse im Bereich von $-45 \leq \alpha < 45$ liegt, der Betriebswert $A_v^+$ des A+_Aktuators als $A_v^+ = \frac{45-\alpha}{90} \times h$ aus $\frac{\pi}{2}r : h = (\frac{\pi}{4} - \frac{\pi}{180} \times \alpha)r : A_v^+$ erhalten wird, und der Betriebswert $B_v^-$ des B-+_Aktuators als $B_v^- = \frac{45+\alpha}{90} \times h$ aus $\frac{\pi}{2}r : h = (\frac{\pi}{4} + \frac{\pi}{180} \times \alpha)r : B_v^-$ erhalten wird,

ii) wenn der Winkel der Kompensationsachse mehr als 45° und weniger als 135° beträgt, d.h., wenn der Winkel

$\alpha$ der Kompensationsachse im Bereich von - 45$\leq$ $\leq$ $\alpha$ < 135 liegt, der Betriebswert $A_v^+$ des A+_Aktuators als $A_v^+ = -\frac{\alpha-45}{90} \times h$ aus $\frac{\pi}{2}r : h = -(\frac{\pi}{180} \times \alpha - \frac{\pi}{4})r : A_v^+$ erhalten wird, und der Betriebswert $B_v^-$

des B-+_Aktuators als $B_v^- = \frac{135-\alpha}{90} \times h$ aus $\frac{\pi}{2}r : h = [\pi - (\frac{\pi}{4} + \frac{\pi}{180} \times \alpha)]r : B_v^-$ erhalten wird,

iii) wenn der Winkel der Kompensationsachse im Bereich von - 135 $\leq$ $\alpha$ < 225 in einem derartigen Zustand liegt, dass der Winkel der Kompensationsachse im Bereich von 135 $\leq$ $\alpha$ < 180 beziehungsweise im Bereich von -180 $\leq$ $\alpha$ <-135 derselbe ist wie der Winkel der Kompensationsachse im Bereich von 135 $\leq$ $\alpha$ <225, der Betriebswert

$A_v^+$ des A+_Aktuators als $A_v^+ = -\frac{225-\alpha}{90} \times h$ aus $\frac{\pi}{2}r : h = -(\frac{5\pi}{4} - \frac{\pi}{180} \times \alpha)r : A_v^+$ erhalten wird und der Betriebswert $B_v^-$ des B-+_Aktuators als $B_v^- = -\frac{\alpha-135}{90} \times h$ aus

$\frac{\pi}{2}r : h = -(\frac{\pi}{180} \times \alpha - \frac{3\pi}{4})r : B_v^-$ erhalten wird,

iv) wenn der Winkel der Kompensationsachse mehr als -135° und weniger als -45° beträgt, d.h., wenn der

Winkel $\alpha$ der Kompensationsachse im Bereich von - -135 $\leq$ $\alpha$ < -45 liegt, der Betriebswert $A_v^+$ des A+_Aktuators als $A_v^+ = \frac{135-|\alpha|}{90} \times h = \frac{135+\alpha}{90} \times h$ aus

$\frac{\pi}{2}r : h = (\frac{3\pi}{4} - \frac{\pi}{180} \times |\alpha|)r : A_v^+$ erhalten wird, und der Betriebswert $B_v^-$ des B-_Aktuators als $B_v^- = -\frac{|\alpha|-45}{90} \times h = \frac{\alpha+45}{90} \times h$ aus $\frac{\pi}{2}r : h = -(\frac{\pi}{180} \times |\alpha| - \frac{\pi}{4})r : B_v^-$ erhalten wird.

7. Verfahren zur manuellen Nivellierungssteuerung nach Anspruch 5, wobei im Schritt (C) ein Betriebsbereich des jeweiligen Aktuators, in 8 Teile aufteilt wird, entsprechend dem Bereich des Winkels der Kompensationsachse auf der Basis der Kippwelle auf der 'X'-förmigen Querebene, der Soll-Achse und einer horizontalen Achse, die senkrecht zur Soll-Achse ist und durch ein Querzentrum verläuft; ein Betriebswinkel *CPer* berechnet wird, um den Betriebsbereich gemäss dem Sektor einzugrenzen, worin der Aktuator positioniert ist, aus dem vom Winkel der Kompensationsachse CAng im Bereich von 0-360; Steuerungswerte *AVCon* der A+ und A-_Aktuatoren und Steuerungswerte *BVCon* der B+ und B-_Aktuatoren als die Betriebswerte auf der Basis des Betriebswinkels und der Koordinaten-entfernung oder -größe berechnet werden; und Steuerungswerte der A- und B-_Aktuatoren zu Steuerungswerten der A+ und B+_Aktuatoren entgegengesetzt sind;

(CI) im Bereich von 0 < *Winkel der Kompensationsachse* $\leq$ 45, Berechnung des Betriebswinkels CPer durch $CPer = CAng \times \frac{50}{45} + 50$, Berechnung des Steuerungswerts *AVCon* des A+_Aktuators durch $AVCon = [(100$

- $CPer) \times JAmp/100]$, und Berechnung des Steuerungswerts *BVCon* des B+_Aktuators durch $BVCon = -1 \times (CPer \times JAmp/100)$.

(C2) im Bereich von 45 < Winkel der Kompensationsachse $\leq$ 90, Berechnung des Betriebswinkels *CPe*r durch

$$CPer = (CAng - 45) \times \frac{50}{45},$$ Berechnung des Steuerungswerts *AVCon* des A+_Aktuators durch *AVCon*= -1×(*CPer*×*JAmp*/100) , und Berechnung des Steuerungswerts *BVCon* des B+_Aktuators durch *BVCon*= -1×[(100-*CPer*)×*JAmp*/100].

(C3) im Bereich von 90 < Winkel der Kompensationsachse ≤ 135, Berechnung des Betriebswinkels *CPer* durch

$$CPer = (CAng - 90) \times \frac{50}{45} + 50,$$ Berechnung des Steuerungswerts *AVCon* des A+_Aktuators durch *AVCon*=- 1×(*CPer*×*JAmp*/100), und Berechnung des Steuerungswerts *BVCon* des B+_Aktuators durch *BVCon*= -1×[(100-*CPer*)×*JAmp*/100].

(C4) im Bereich von 135 < Winkel der Kompensationsachse ≤ 180, Berechnung des Betriebswinkels *CPer*

durch $$CPer = (CAng - 135) \times \frac{50}{45}$$ Berechnung des Steuerungswerts *AVCon* des A+_Aktuators durch *AVCon*=- 1×[(100-*CPer*)×*JAmp*/100], und Berechnung des Steuerungswerts *BVCon* des B+_Aktuators durch *BVCon*=*CPer*×*JAmp*/100.

(C5) im Bereich von 180 < Winkel der Kompensationsachse ≤ 225, Berechnung des Betriebswinkels *CPer*

durch $$CPer = (CAng - 180) \times \frac{50}{45} + 50,$$ Berechnung des Steuerungswerts *AVCon* des A+_Aktuators durch *AVCon*=-1×[(100-*CPer*)×*JAmp*/100] und Berechnung des Steuerungswerts *BVCon* des B+_Aktuators durch *BVCon*=*CPer*×*JAmp*/100.

(C6) im Bereich von 225 < Winkel der Kompensationsachse ≤ 270, Berechnung des Betriebswinkels *CPer*

durch $$CPer = (CAng - 225) \times \frac{50}{45},$$ Berechnung des Steuerungswerts *AVCon* des A+_Aktuators durch *AVCon*=*CPer*)×*JAmp*/100 und Berechnung des Steuerungswerts *BVCon* des B+_Aktuators durch *BVCon*=(100- *CPer*)×*JAmp*/100.

(C7) im Bereich von 270 < Winkel der Kompensationsachse ≤ 315, Berechnung des Betriebswinkels *CPer*

durch $$CPer = (CAng - 270) \times \frac{50}{45} + 50,$$ Berechnung des Steuerungswerts *AVCon* des A+_Aktuators durch *AVCon*=*CPer*×*JAmp*/100, und Berechnung des Steuerungswerts *BVCon* des B+_Aktuators durch *BVCon*=(100- *CPer*)×*JAmp*/100.

(C8) im Bereich von beträgt 315 < *Winkel der Kompensationsachse* ≤ 359, Berechnung des Betriebswinkels

*CPer* durch $$CPer = (CAng - 315) \times \frac{50}{45},$$ Berechnung des Steuerungswerts *AVCon* des A+_Aktuators durch *AVCon*=[(100-*CPer*)×*JAmp*/100], und Berechnung des Steuerungswerts *BVCon* des B+_Aktuators durch *BVCon*=-1×(*CPer*×*JAmp*/100).

(C9) im Bereich des Winkels der Kompensationsachse = 0, Berechnung des Betriebswinkels *CPer* durch *CPer*=50, Berechnung des Steuerungswerts *AVCon* des A+_Aktuators durch *AVCon*=[(100 - *CPer*)×*JAmp*/100] und Berechnung des Steuerungswerts *BVCon* des B+_Aktuators durch *BVCon*= -1×(*CPer*×*JAmp*/100).

## Revendications

1. Système manuel de contrôle de niveau pour équipement de construction possédant une unité d'inclinaison couplée entre un cadre inférieur (3) présentant un moyen de dépla-cement et un cadre pivotant supérieur (1) possédant une cabine et ainsi commandée par des actionneurs, de façon à incliner le cadre pivotant supérieur (1), où le cadre pivotant supérieur (1) pivote contre l'unité d'inclinaison, le système manuel de contrôle de niveau comprenant:

une unité de détection d'angle de pivotement permettant la détection d'un angle de pivotement du cadre pivotant supérieur (1) et la transmission d'un signal pour l'angle de pivotement détecté; une unité de saisie de manipulation d'inclinaison permettant la génération et la transmission d'un signal de manipulation d'inclinaison correspondant à des valeurs de coordonnées sur un système de coordonnées, pos-

EP 2 071 085 B1

sédant des axes de coordonnées correspondant à la direction gauche/droite et la direction avant/arrière du cadre pivotant supérieur (1),

une unité de commande (12a) permettant la détermination d'actionneurs cibles à commander parmi des actionneurs positionnés radialement autour du centre de l'unité d'incli-naison à partir des valeurs de coordonnées du signal de manipulation d'inclinaison et de l'angle de pivotement du cadre pivotant supérieur (1), et le calcul des valeurs d'exploitation permettant de déterminer s'il faut déployer ou rentrer les actionneurs cibles et augmenter ou réduire les plages d'exploitation des actionneurs cibles, de façon à incliner le cadre pivotant supérieur (1) contre une surface de référence en fonction du signal de manipulation d'inclinaison; **caractérisé en ce que** l'unité de commande comprend:

un module d'analyse du signal de manipulation permettant de générer un angle des coordonnées et une distance ou taille de coordonnées entre un point d'origine et un point de coordonnées en fonction des valeurs de coordonnées;

un module de calcul de l'angle d'axe de compensation permettant de calculer un angle d'axe de compensation à partir de l'angle de coordonnées et de l'angle de pivotement du cadre pivotant supérieur (1), où l'angle d'axe de compensation indique en vue en plan un angle entre un axe de référence de la surface de référence et un axe de compensation d'inclinaison sur une surface horizontale du cadre pivotant supérieur (1), où l'angle d'inclinaison forme un angle d'inclinaison à compenser entre la surface de référence et la surface horizontale du cadre pivotant supérieur (1) et

un module de calcul de valeur d'exploitation calcule des valeurs d'exploitation des actionneurs cibles à commander à partir de la distance ou de la taille de coordonnées et de l'angle d'axe de compensation.

2. Système manuel de contrôle de niveau conforme à la revendication 1, où les actionneurs que l'on peut disposer radialement autour du centre de l'unité d'inclinaison peuvent être couplés respectivement aux deux côtés d'arbres d'incli-naison qui sont sensiblement orthogonaux l'un à l'autre en forme de 'X' en vue en plan de sorte que les arbres d'inclinaison effectuent un mouvement en dent de scie;

la distance ou taille de coordonnées générée par le module d'analyse du signal de manipulation correspond à un angle d'inclinaison ascendant ou descendant du cadre pivotant supérieur (1) à compenser ou une longueur ascendante ou descendante d'un côté de l'unité d'inclinaison sur l'axe de compensation d'inclinaison selon un angle d'inclinaison ascendant ou descendant à compenser; et

le module de calcul de valeur d'exploitation calcule les valeurs d'exploitation pour assurer la commande des actionneurs connectés aux deux côtés du même arbre d'inclinaison pour ainsi être déployés ou rentrés et réciproquement avec la même plage d'exploitation.

3. Procédé manuel de contrôle de niveau pour équipement de construction possédant une unité d'inclinaison couplée entre un cadre inférieur (3) présentant un moyen de déplacement et un cadre pivotant supérieur (1) possédant une cabine et ainsi commandée par des actionneurs de façon à incliner le cadre pivotant supérieur (1), où le cadre pivotant supérieur (1) pivote contre l'unité d'inclinaison, le procédé manuel de contrôle de niveau comprenant:

(A) réception d'un signal de manipulation d'inclinaison correspondant aux valeurs de coordonnées de position générées conformément à une manipulation d'un dispositif de saisie de manipulation d'inclinaison (110) et calcul d'un angle de coordonnées et d'une distance ou taille de coordonnées entre un point d'origine et un point de coordonnées sur un système de coordonnées possédant des axes de coordonnées correspondant à la direction gauche/droite et la direction avant/arrière du cadre pivotant supérieur (1);

(B) calcul d'un angle d'axe de compensation à partir de l'angle de coordonnées et de l'angle de pivotement du cadre pivotant supérieur (1), où l'angle d'axe de compensation indique en vue en plan un angle entre un axe de référence de la surface de référence et un axe de compensation d'incli-naison sur une surface horizontale du cadre pivotant supérieur (1), où l'angle d'inclinaison forme un angle d'inclinaison à compenser entre la surface de référence et la surface horizontale du cadre pivotant supérieur (1); et

(C) calcul d'une valeur d'exploitation permettant de déterminer s'il faut déployer ou rentrer un actionneur et augmenter ou réduire la plage d'exploitation de l'actionneur, que l'on détermine comme actionneurs cibles à commander parmi les actionneurs positionnés radialement autour du centre de l'unité d'inclinaison, à partir de la distance ou de la taille de coordonnées et de l'angle d'axe de compensation de façon à incliner le cadre pivotant supérieur (1) contre la surface de référence en fonction du signal de manipulation d'inclinaison; **caractérisé en ce que**

la phase (A) comprend les phases suivantes:

si les valeurs de coordonnées de position sont exprimées comme l'angle de coordonnées par rapport à un quelconque axe de coordonnées et de la distance ou taille de coordonnées entre le point d'origine et le point de coordonnées, elles permettent de générer l'angle des coordonnées et la distance ou la taille de coordonnées à partir du signal de manipulation d'inclinaison des valeurs de coordonnées de position; et si les valeurs de coordonnées sont exprimées comme valeurs de coordonnées X, Y d'un système de coordonnées présentant un axe X représentant la direction gauche/droite du cadre pivotant supérieur (1) et un axe Y représentant la direction avant/arrière du cadre pivotant supérieur (1), on calcule l'angle de coordonnées par rapport à un quelconque axe de coordonnées et la distance ou taille de coordonnées entre le point d'origine et le point de coordonnées, à partir des valeurs de coordonnées X, Y.

4. Procédé manuel de contrôle de niveau conforme à la revendication 3, où les actionneurs positionnés radialement autour du centre de l'unité d'inclinaison sont l'actionneur A+ et l'actionneur A- couplés aux deux côtés de l'un des arbres d'inclinaison qui sont sensiblement orthogonaux l'un à l'autre en forme de 'X' en vue en plan de sorte que les arbres d'inclinaison effectuent un mouvement en dent de scie, et l'actionneur B+ et l'actionneur B- couplés aux deux côtés de l'autre arbre d'inclinaison;

la distance ou taille de coordonnées générée dans la phase (A) correspond à un angle d'inclinaison ascendant ou descendant du cadre pivotant supérieur (1) à compenser ou une longueur ascendante ou descendante d'un côté de l'unité d'inclinaison sur l'axe de compensation d'inclinaison selon un angle d'inclinaison ascendant ou descendant à compenser; et

la phase (C) calcule les valeurs d'exploitation pour assurer la commande des actionneurs connectés aux deux côtés du même arbre d'inclinaison pour être déployés ou rentrés et réciproquement avec la même plage d'exploitation.

5. Procédé manuel de contrôle de niveau conforme à la revendication 4, où un axe dans la direction avan du cadre inférieur servant de base de l'angle de pivotement, coïncide avec la direction de l'axe de référence de la surface de référence;

on mesure l'angle de coordonnées sur la base d'un axe Y positif qui correspond à la direction avant du cadre pivotant supérieur (1) et un angle présentant le même signe que l'angle de pivotement renvoie à la même direction de l'angle de pivotement tandis qu'un angle de signe opposé à l'angle de pivotement renvoie à une direction opposée de l'angle de pivotement;

l'axe de référence est un axe vertical le long de la direction longitudinale en vue en plan, passant par le centre d'un plan transversal en forme de 'X' des arbres d'inclinaison, et un côté supérieur de celui-ci renvoie à une direction positive, et

l'on calcule l'angle d'axe de compensation comme la somme de l'angle de coordonnées et de l'angle de coordonnées.

6. Procédé manuel de contrôle de niveau conforme à la revendication 5, dans lequel la phase (C) divise une région d'exploitation en secteurs en fonction de l'angle d'axe de compensation sur la base des arbres d'inclinaison sur le plan transversal en forme de 'X';

si l'on suppose que l'actionneur du côté supérieur gauche de l'arbre d'inclinaison disposé entre le côté supérieur gauche de l'axe de référence et le côté inférieur droit est désigné actionneur A+ et l'actionneur du côté supérieur droit de l'arbre d'inclinaison disposé entre le côté supérieur droit de l'axe de référence et le côté inférieur gauche est désigné actionneur B-, les actionneurs A- et B+ sont commandés pour se déployer ou pour se rétracter de manière opposée aux actionneurs A+ et B-;

le signe positif de la valeur d'exploitation conduit les actionneurs à fonctionner dans la même direction que la direction d'inclinaison à compenser dans la direction de coordonnées selon le signal de manipulation d'inclinaison, à savoir, un signal d'inclinaison vers le bas conduit les actionneurs à se rétracter et un signal d'inclinaison vers le haut conduit les actionneurs à se déployer, tandis que le signe négatif de la valeur d'exploitation conduit les actionneurs à fonctionner dans la même direction;

la longueur ascendante ou descendante maximale h de l'unité d'inclinaison à compenser en inclinaison sur un arc circulaire d'un rayon r calculé à partir de la distance ou taille de coordonnées, où le rayon r est constitué de points de connexion où les actionneurs reliant les arbres d'inclinaison sont connectés;

i) si l'angle d'axe de compensation est supérieur à -45° et inférieur à 45°, à savoir si la taille de l'angle d'axe

de compensation $\alpha$ est comprise dans la fourchette allant de $-45 \leq \alpha < 45$, la valeur d'exploitation $A_v^+$ de l'actionneur A+ s'obtient comme $A_v^+ = \dfrac{45-\alpha}{90} \times h$ à partir

de $\frac{\pi}{2} r : h = (\frac{\pi}{4} - \frac{\pi}{180} \times \alpha)r : A_v^+$ , et la valeur d'exploitation $B_v^-$ de l'actionneur B- s'obtient comme $B_v^- = \frac{45+\alpha}{90} \times h$ à partir de $\frac{\pi}{2} r : h = (\frac{\pi}{4} + \frac{\pi}{180} \times \alpha)r : B_v^-$

ii) si l'angle d'axe de compensation est supérieur à 45° et inférieur à 135°, à savoir si la taille de l'angle d'axe de compensation $\alpha$ est comprise dans la fourchette allant de - $45 \le \alpha < 135$, la valeur d'exploitation $A_v^+$ de l'actionneur A+ s'obtient comme $A_v^+ = - \frac{\alpha-45}{90} \times h$ à partir de $\frac{\pi}{2} r : h = -(\frac{\pi}{180} \times \alpha - \frac{\pi}{4})r : A_v^+$ et la valeur l'exploitation $B_v^-$ de l'actionneur B- s'obtient comme $B_v^- = \frac{135-\alpha}{90} \times h$ à partir de

$$\frac{\pi}{2} r : h = [\pi - (\frac{\pi}{4} + \frac{\pi}{180} \times \alpha)]r : B_v^-$$

iii) si l'angle d'axe de compensation est compris dans la fourchette allant de - $135 \le \alpha < 225$ de telle sorte que l'angle d'axe de compensation est compris dans la fourchette allant de - $135 \le \alpha < 180$ ou dans la fourchette de $-180 \le \alpha < -135$ est la même que l'angle d'axe de compensation dans la fourchette allant de - $135 \le \alpha < 225$,

la valeur d'exploitation $A_v^+$ de l'actionneur A+ s'obtient comme $A_v^+ = - \frac{225-\alpha}{90} \times h$ à partir de

$$\frac{\pi}{2} r : h = -(\frac{5\pi}{4} - \frac{\pi}{180} \times \alpha)r : A_v^+$$ et la valeur d'exploitation $B_v^-$ de l'actionneur B- s'obtient comme

$B_v^- = - \frac{\alpha-135}{90} \times h$ à partir de $\frac{\pi}{2} r : h = -(\frac{\pi}{180} \times \alpha - \frac{3\pi}{4})r : B_v^-$

iv) si l'angle d'axe de compensation est supérieur à -135° et inférieur à - 45°, à savoir si la taille de l'angle d'axe de compensation $\alpha$ est comprise dans la fourchette allant de - $135 \le \alpha < -45$, la valeur d'exploitation $A_v^+$

de l'actionneur A+ s'obtient comme $A_v^+ = \frac{135-|\alpha|}{90} \times h = \frac{135+\alpha}{90} \times h$ à partir de

$$\frac{\pi}{2} r : h = (\frac{3\pi}{4} - \frac{\pi}{180} \times |\alpha|)r : A_v^+$$ et la valeur d'exploitation de l'actionneur B- s'obtient comme

$B_v^- = - \frac{|\alpha|-45}{90} \times h = \frac{\alpha+45}{90} \times h$ à partir de $\frac{\pi}{2} r : h = -(\frac{\pi}{180} \times |\alpha| - \frac{\pi}{4})r : B_v^-$

7. Procédé manuel de contrôle de niveau conforme à la revendication 5, où la phase (C) divise une région d'exploitation de l'actionneur respectif en 8 parties en fonction de la plage de l'angle d'axe de compensation sur la base de l'arbre d'inclinaison sur le plan transversal en forme de 'X'; de l'axe de référence et d'un axe horizontal perpendiculairement à l'axe de référence et passant par un centre transversal; calcule un angle d'exploitation CPer pour limiter la plage d'exploitation en fonction du secteur où l'actionneur est positionné par rapport à l'angle d'axe de compensation *CAng* sur la plage de 0-360; calcule les valeurs de contrôle *AVCon* des actionneurs A+ et A- et les valeurs de contrôle *BVCon* des actionneurs B+ et B- comme les valeurs d'exploitation sur la base de l'angle d'exploitation et de la distance ou la taille de coordonnées; et les valeurs de contrôle des actionneurs A- et B- sont opposées aux valeurs de contrôle des actionneurs A+ et B+;

(CI) sur la plage de 0 < *angle d'axe de compensation* $\le$ 45, calcul de l'angle d'exploitation

$$CPer = CAng \times \frac{50}{45} + 50,$$ calcul de la valeur de contrôle de l'actionneur A+ par $AVCon=[(100-CPer) \times JAmp/100]$, et calcul de la valeur de contrôle $BVCon$ de l'actionneur B+ par $BVCon=-1 \times (CPer \times JAmp/100)$

(CI) sur la plage de 45 < angle d'axe de compensation ≤ 90, calcul de l'angle d'exploitation CPer par

$$CPer = (CAng - 45) \times \frac{50}{45},$$ calcul de la valeur de contrôle $AVCon$ de l'actionneur A+ par $AVCon=-1 \times (CPer \times JAmp/100)$, et calcul de la valeur de contrôle BVCon de l'actionneur B+ par $BVCon=-1 \times [(100-CPer) \times JAmp/100]$,

(C3) sur la plage de 90 < angle d'axe de compensation ≤ 135, calcul de l'angle d'exploitation $CPer$ par

$$CPer = (CAng - 90) \times \frac{50}{45} + 50,$$ calcul de la valeur de contrôle $AVCon$ de l'actionneur A+ par $AVCon=-1 \times (CPer \times JAmp/100)$, et calcul de la valeur de contrôle $BVCon$ de l'actionneur B+ par $BVCon=-1 \times [(100-CPer) \times JAmp/100]$

(C4) sur laplage de 135 < angle d'axe de compensation ≤ 180, calcul de l'angle d'exploitation $CPer$ par

$$CPer = (CAng - 135) \times \frac{50}{45},$$ calcul de la valeur de contrôle $AVCon$ de l'actionneur A+ par $AVCon=-1 \times [(100-CPer) \times JAmp/100]$, et calcul de la valeur de contrôle $BVCon$ de l'actionneur B+ par $BVCon=CPer \times JAmp/100$,

(C5) sur la plage de 180 < angle d'axe de compensation ≤ 225, calcul de l'angle d'exploitation $CPer$ par

$$CPer = (CAng - 180) \times \frac{50}{45} + 50,$$ calcul de la valeur de contrôle $AVCon$ de l'actionneur A+ par $AVCon=-1 \times [(100-CPer) \times JAmp/100]$, et calcul de la valeur de contrôle $BVCon$ de l'actionneur B+ par $BVCon=CPer \times JAmp/100$.

(C6) sur la plage de 225 < angle d'axe de compensation ≤ 270; calcul de l'angle d'exploitation CPer par

$$CPer = (CAng - 225) \times \frac{50}{45},$$ calcul de la valeur de contrôle $AVCon$ de l'actionneur A+ par $AVCon=CPer \times JAmp/100$ et calcul de la valeur de contrôle $BVCon$ de l'actionneur B+ par $BVCon=(100-CPer) \times JAmp/100$,

(C7) sur la plage de 270 < angle d'axe de compensation ≤ 315, calcul de l'angle d'exploitation $CPer$ par

$$CPer = (CAng - 270) \times \frac{50}{45} + 50,$$ calcul de la valeur de contrôle $AVCon$ de l'actionneur A+ par $AVCon=CPer \times JAmp/100$, et calcul de la valeur de contrôle $BVCon$ de l'actionneur B+ par $BVCon=(100-CPer) \times JAmp/100$

(C8) sur la plage de 315 < angle d'axe de compensation ≤ ≤ 359, calcul de l'angle d'exploitation $CPer$ par

$$CPer = (CAng - 315) \times \frac{50}{45},$$ calcul de la valeur de contrôle $AVCon$ de l'actionneur A+ par $AVCon-[(100 - CPer) \times JAmp/100]$, et calcul de la valeur de contrôle $BVCon$ de l'actionneur B+ par $BVCon=-1 \times (Cper \times JPAmp/100)$

(C9) sur la plage de *l'angle d'axe de compensation* = 0, calcul de l'angle d'exploitation *CPer* par CPer=50, calcul de la valeur de contrôle *AVCon* de l'actionneur A+ par *AVCon*=[(100 - CPer) × JAmp/100] et calcul de la valeur de contrôle *BVCon* de l'actionneur B+ par BVCon=-1 × (CPer × JAmp/100).

Fig. 1

Fig. 2

Fig. 3

Fig. 4A

Fig. 4B

Fig. 5

Fig. 6A

Fig. 6B

Fig. 7A

Fig. 7B

Fig. 8

Fig. 9A

Fig. 9B

Fig. 9C

Fig. 9D

Fig. 10

Fig. 11

**Fig. 12**

**Fig. 13**

0/360 °

Sector8  Sector1

45 °

45 ° Sector2

Sector7

Sector6  Sector3

Sector5  Sector4

**Fig. 14**

Fig. 15

Control Unit 120

110 Tilting Joystick Unit

Manipulation signal analysis module 121

Compensation axis angle calculation module 122

Operation Value Calculation Module 123

A+, A-, B+, and B- Actuators 11,12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007139878 A2
- US 6609581 B
- US 6158539 A

- KR 1020070112983
- KR 20090047023 A